# EUROPEAN PATENT SPECIFICATION

(11) **EP 3 825 222 B1**
(45) Date of publication and mention of the grant of the patent: **03.09.2025**
(21) Application number: 19837346.6
(22) Date of filing: 20.06.2019
(51) Int. Cl.: B63B 25/08, B63B 27/24, F17C 9/00, B65D 90/30, B63H 21/38, B63B 25/12

(54) **VOLATILE ORGANIC COMPOUND TREATMENT SYSTEM AND SHIP**
SYSTEM ZUR BEHANDLUNG VON FLÜCHTIGEN ORGANISCHEN VERBINDUNGEN UND SCHIFF
SYSTÈME DE TRAITEMENT DE COMPOSÉS ORGANIQUES VOLATILS ET NAVIRE

(30) Priority: 20.07.2018 KR 20180084962
(43) Date of publication of application: 26.05.2021
(73) Proprietor: Korea Shipbuilding & Offshore Engineering Co., Ltd., Jongno-gu Seoul 03058 (KR)
(72) Inventor: LEE, Ji Hoon, Ulsan 44032 (KR); LEE, Jong Hoon, Ulsan 44032 (KR); LEE, Dong Jin, Ulsan 44032 (KR); CHUNG, Yi Hyo, Ulsan 44032 (KR); HAM, Jin Ki, Ulsan 44032 (KR); AN, Tae Gi, Ulsan 44032 (KR)
(74) Representative: Betten & Resch
(86) International application number: PCT/KR2019/007468
(87) International publication number: WO 2020/017769

(56) References cited:
- KR-A- 20140 096 446
- KR-A- 20140 096 446
- KR-A- 20180 012 466
- KR-B1- 101 291 352
- KR-B1- 101 291 352
- KR-B1- 101 336 166
- KR-B1- 101 336 166
- KR-B1- 101 399 999
- KR-B1- 101 399 999
- US-A1- 2016 356 424

## Description

### TECHNICAL FIELD

The present invention relates to a volatile organic compound treatment system (hereinafter, referred to as a VOC treatment system) and a ship having the same.

### BACKGROUND ART

In general, a crude oil carrier is a ship for loading crude oil mined from a production place into a plurality of cargo tanks for crude oil storage and transporting the crude oil to a source of demand through the sea, and is designated as a supertanker, an oil carrier, an oil tanker, or the like. The crude oil carrier is also referred to as VLCC, ULCC, or the like according to the size of a cargo tank for storing crude oil.

The crude oil carrier sails in a state in which a sufficient amount of crude oil is loaded into three to five cargo tanks arranged side by side in an antero-posterior direction of a hull. Liquid hydrocarbon naturally produced underground or a product obtained by refining the liquid hydrocarbon is commonly called as the crude oil stored in the cargo tank.

However, the crude oil generates a large amount of a volatile organic compound (hereinafter, referred to as a VOC) in a process of loading the crude oil into the crude oil carrier and/or in a state in which the crude oil is loaded into the cargo tanks of the crude oil carrier.

The generated VOC is very harmful for human bodies. When the generated VOC is discharged in the air, the generated VOC causes smog, etc., which results in air pollution and environmental pollution. In addition, loss of transporting crude oil of which amount corresponds to that of the generated VOC is caused.

Accordingly, recently, various researches and developments for a method capable of recycling a VOC generated in a crude oil carrier without discharging the VOC in the air have been continuously conducted, but any effective plan has not been derived yet.

Document US 2016/356424 A1 discloses a boil-off gas treatment system.

Document KR 101 336 166 B1 discloses a wax abatement system of a crude oil reservoir.

Document KR 101 399 999 B1 discloses a volatile organic compound condensation system.

Document KR 101 291 352 B1 discloses a crude oil loading and unloading device of a crude oil carrier.

Document KR 2014 0096446 A discloses an oil mist recovery device and a ship including the same.

### DISCLOSURE

### TECHNICAL PROBLEM

The present invention is conceived to solve the aforementioned problems. Accordingly, an object of the present invention is to provide a VOC treatment system in which a VOC generated in crude oil is used for propulsion of a hull, etc., to solve environmental pollution and to prevent the crude oil from being wasted, and a ship having the VOC treatment system.

Also, an object of the present invention is to provide a VOC treatment system capable of improving treatment efficiency by adjusting control according to the generation amount of a VOC generated in crude oil, and a ship having the VOC treatment system.

Also, an object of the present invention is to provide a VOC treatment system capable of suppressing unnecessary energy consumption by resorbing a VOC generated in a process of loading crude oil into a tank, and a ship having the VOC treatment system.

### TECHNICAL SOLUTION

The invention is defined in the independent claims.

The dependent claims define embodiments of the invention.

In accordance with an aspect of the present invention, there is provided a VOC treatment system including: a plurality of oil storage tanks having oil loaded thereinto; and a VOC compressor pressurizing a VOC generated when oil is loaded into the oil storage tank, wherein the VOC compressor compresses a VOC generated in a first oil storage tank under loading and transfers the compressed VOC to a second oil storage tank before loading, and compresses a VOC generated in the second oil storage tank in loading of the second oil storage tank and returns the compressed VOC to the first oil storage tank.

Specifically, the VOC compressor may compress a VOC and return the compressed VOC to the inside of oil loaded into the first oil storage tank.

Specifically, the VOC treatment system may include: a VOC discharge line connected from the oil storage tank to the VOC compressor; and a VOC return line connected from the VOC compressor to the inside of the oil storage tank.

Specifically, the VOC return line may extend down to an inner lower side of the oil storage tank.

Specifically, the VOC compressor may compress a VOC generated in the oil storage tank into which the oil is lastly loaded, and divide and return the compressed VOC to the other oil storage tanks.

In accordance with another aspect of the present invention, there is provided a ship having the VOC treatment system.

### ADVANTAGEOUS EFFECTS

In the VOC treatment system and the ship having the same in accordance with the present disclosure, a VOC is used as fuel of an engine, so that environmental pollution can be effectively prevented by suppressing the VOC from being discharged in the air.

Also, in the VOC treatment system and the ship having the same in accordance with the present disclosure, a component for treating a VOC is changed according to a time at which the VOC is generated, so that treatment efficiency of the VOC and energy consumption efficiency can be maximized.

Also, in the VOC treatment system and the ship having the same in accordance with the present invention, a VOC generated in a bunkering process is returned to become a state in which it is unnecessary to treat the VOC when loading is completed, so that operation cost can be reduced.

### BRIEF DESCRIPTION OF THE DRAWINGS

Embodiments depicted in FIGS. 1-21, 26 and 27 are not covered by the appended claims and do not represent the claimed invention.
FIG. 1 is a side view of a ship having VOC treatment systems in accordance with first to fourth examples.
FIG. 2 is a conceptual view of the VOC treatment system in accordance with the first example.
FIG. 3 is a conceptual view of the VOC treatment system in accordance with the second example.
FIG. 4 is a conceptual view of the VOC treatment system in accordance with the third example.
FIG. 5 is a conceptual view of the VOC treatment system in accordance with the fourth example.
FIG. 6 is a side view of a ship having VOC treatment systems in accordance with fifth and sixth examples.
FIG. 7 is a conceptual view of the VOC treatment system in accordance with the fifth example.
FIG. 8 is a conceptual view of the VOC treatment system in accordance with the sixth example.
FIG. 9 is a conceptual view of a ship including VOC treatment systems in accordance with seventh to eleventh examples.
FIG. 10 is a conceptual view of the VOC treatment system in accordance with the seventh example.
FIG. 11 is a conceptual view of the VOC treatment system in accordance with the eighth example.
FIG. 12 is a conceptual view of the VOC treatment system in accordance with the ninth example.
FIG. 13 is a conceptual view of the VOC treatment system in accordance with the tenth example.
FIG. 14 is a conceptual view of the VOC treatment system in accordance with the eleventh example.
FIG. 15 is a conceptual view of a VOC treatment system in accordance with a twelfth example.
FIG. 16 is a conceptual view of a VOC treatment system in accordance with a thirteenth example.
FIG. 17 is a conceptual view of a VOC treatment system in accordance with a fourteenth example.
FIG. 18 is a conceptual view of a VOC treatment system in accordance with a fifteenth example.
FIG. 19 is a conceptual view of a VOC treatment system in accordance with a sixteenth example.
FIG. 20 is a conceptual view of a VOC treatment system in accordance with a seventeenth example.
FIG. 21 is a conceptual view of a ship including a VOC treatment system in accordance with an eighteenth example.
FIG. 22 is a conceptual view of a ship including a VOC treatment system in accordance with an embodiment of the present invention.
FIG. 23 is a conceptual view of a ship including the VOC treatment system in accordance with the embodiment of the present invention.
FIG. 24 is a conceptual view of a ship including the VOC treatment system in accordance with the embodiment of the present invention.
FIG. 25 is a conceptual view of the VOC treatment system in accordance with the embodiment of the present invention.
FIG. 26 is a conceptual view of a ship including a VOC treatment system in accordance with a twentieth example.
FIG. 27 is a conceptual view of a ship including VOC treatment systems in accordance with twenty-first and twenty-second examples.

### MODE FOR THE INVENTION

Other objects, specific advantages, and new features of the present invention will be more apparent from preferable embodiments and the following detailed description associated with the accompanying drawings. In the specification, when reference numerals are endowed to components in each drawing, it should be noted that like reference numerals denote like elements even though they are depicted in several drawings. Further, in the following description of the present invention, a detailed explanation of known related technologies may be omitted to avoid unnecessarily obscuring the subject matter of the present invention.

Hereinafter, examples and embodiments of the present invention will be described in detail with reference to the accompanying drawings. Hereinafter, VOC treatment systems will be described, including VOC treatment systems and a ship having the same.

It is noted that the ship is used as a meaning including all offshore plans such as FSRU and FPSO in addition to a crude oil carrier for loading crude oil in which a VOC may be generated. Also, the ship may also include a bunkering vessel for supplying crude oil to another ship or land, in addition to a ship for loading crude oil or being supplied with crude oil to consume the crude oil.

Hereinafter, liquefied gas is a substance which is in a gaseous state at room temperature since its boiling point is lower than the room temperature. The liquefied gas may be LPG, LNG, ethane, propane, butane, ethylene, ammonia, liquid nitrogen, or the like, and exemplarily mean LNG. Also, hereinafter, oil or crude oil has a meaning including all substances (crude oil, kerosene, diesel, gasoline, and the like) which are in a liquid state at room temperature since their boiling point are higher than the room temperature, and are used as fuel.

Also, hereinafter, it is noted that liquefied gas or evaporation gas is not limited to a liquid phase or a gas phase in spite of its expression, and a VOC is also not limited to a liquid phase or a gas phase.

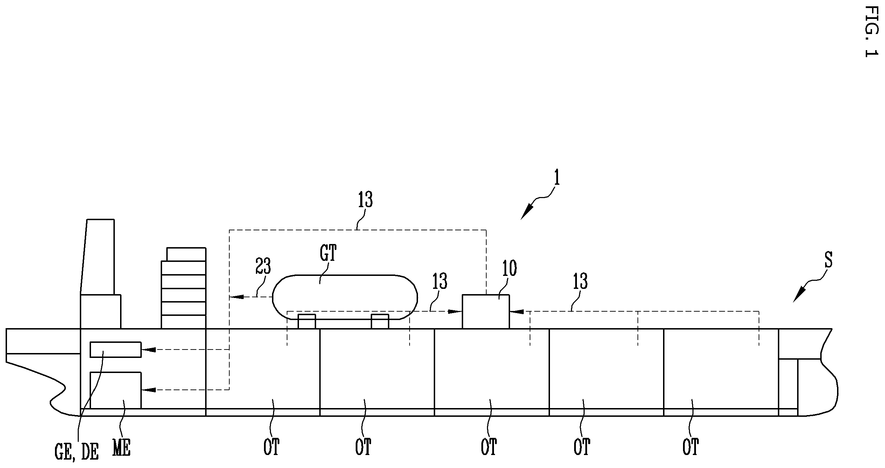

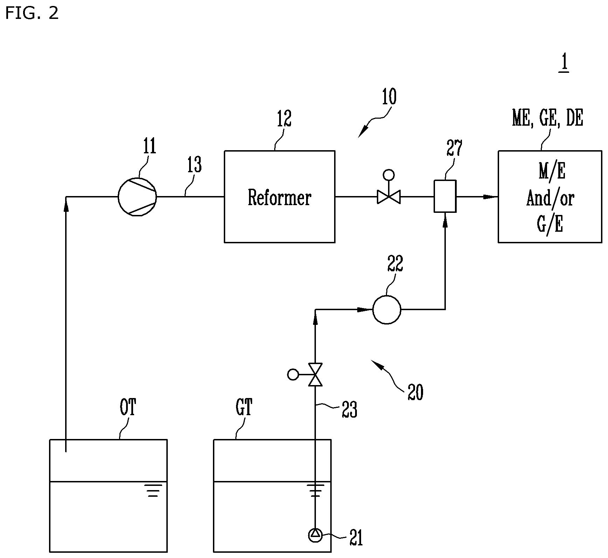

FIG. 1 is a side view of a ship having a VOC treatment system. FIG. 2 is a conceptual view of a VOC treatment system in accordance with a first example.

Referring to FIGS. 1 and 2, the VOC treatment system 1 in accordance with the first example may include an oil storage tank OT, a gas fuel storage tank GT, and a VOC treatment unit 10, and these components may be mounted in a ship S.

The ship S having the VOC treatment system 1 mounted therein includes a hull. A cabin, an engine casing, or the like may be mounted at the stern on an upper deck of the hull, and an engine ME, GE, and DE may be provided at the stern in the hull.

The oil storage tank OT may be a cargo tank mounted in the ship S, and therefore, the ship S may be a crude oil carrier. On the other hand, the gas fuel storage tank GT may be a high-pressure storage container mounted on the upper deck of the ship S, and be provided at each of a portside and a starboard.

In this specification, the engine ME, GE, and DE is an engine consuming a VOC. The engine ME, GE, and DE may be ME-GI, ME-GIE, ME-LGI, XDF or the like as a propulsion engine ME for propelling the hull, and/or be a generator engine GE for supplying power in the ship S. However, hereinafter, the engine ME, GE, and DE may be a concept including all facilities capable of consuming the VOC.

The oil storage tank OT loads oil such as crude oil. About five oil storage tanks OT may be disposed in series in a length direction in the hull, and the storage capacity of each oil storage tank OT is not particularly limited.

A VOC generated from crude oil exists in the oil storage tank OT. The VOC may be a substance including a component, e.g., propane, butane or the like.

In a conventional case, the VOC having explosiveness and toxicity was simply discharged in the air or was treated in a manner that unloaded the VOC to land in state in which the VOC was reliquefied and stored. However, in this example, the engine ME, GE, and DE may be operated by using the VOC so as to utilize energy of the VOC.

To this end, a VOC discharge line 13 may be connected from the oil storage tank OT to the engine ME, GE, and DE, and an inlet of the VOC discharge line may be placed in a form in which the inlet is opened at an inner upper side of the oil storage tank OT.

The gas fuel storage tank GT stores liquefied gas. When the ship S is a crude oil carrier having the oil storage tank OT as a cargo tank as described above, the gas fuel storage tank GT is of type C, and may be mounted on the upper deck.

The liquefied gas stored in the gas fuel storage tank GT may be mixed with the VOC generated in the oil storage tank OT to be supplied to the engine ME, GE, and DE. To this end, a gas fuel supply line 23 may be provided from the gas fuel storage tank GT to the VOC discharge line 13, and a mixer 27 may be provided at a spot at which the gas fuel supply line 23 is connected to the VOC discharge line 13. For reference, in this specification, it is noted that components used to treat gas fuel may be comprehensively designated as a gas fuel treatment unit 20, and the gas fuel treatment unit 20 and the VOC treatment unit 10 are included in a fuel treatment unit 10 and 20.

The gas fuel storage tank GT may store the liquefied gas at a high pressure. The high pressure may mean a required pressure of the engine ME, GE, and DE. Therefore, the liquefied gas discharged from the gas fuel storage tank GT may be in a state having the required pressure of the engine ME, GE, and DE, and hence the VOC treatment unit 10 which will be described later may supply the liquefied gas discharged from the gas fuel storage tank GT to the engine ME, GE, and DE without any separate compression (or through compression having a small ratio with respect to the VOC).

The VOC treatment unit 10 supplies the VOC generated from the oil storage tank OT as fuel of the engine ME, GE, and DE mounted in the ship S. To this end, the VOC treatment unit 10 may include a VOC compressor 11 and a reformer 12.

The VOC compressor 11 compresses the VOC. The VOC compressor 11 may compress the VOC at the required pressure of the engine ME, GE, and DE. The required pressure of the engine ME, GE, and DE may be variously determined according to kinds of the engine ME, GE, and DE. In an example, the VOC compressor 11 may compress the VOC at about 10 to ME, GE, and DE bar or about 100 to ME, GE, and DE bar.

The VOC compressor 11 may be provided in multiple stages, and a middle cooler (not shown) may be provided between the VOC compressors 11 provided in the multiple stages. Also, the VOC compressors 11 may be provided in parallel to back up each other.

The reformer 12 reforms the compressed VOC and supplies the reformed VOC to the engine ME, GE, and DE. The reformer 12 may chemically treat the VOC including propane, butane, etc., thereby performing methanation.

Chemical reaction caused by the reformer 12 has already been known in the art, and therefore, a detailed description will be omitted. However, in this example, the engine ME, GE, and DE may be an engine for mainly consuming methane included in LNG, and the reformer 12 may reform the VOC to be in a state suitable for fuel of the engine ME, GE, and DE.

The VOC treatment unit 10 mixes liquefied gas with the VOC and supplies the mixture to the engine ME, GE, and DE. In this case, the above-described mixer 27 may be used. The mixer 27 may be provided at a downstream of the reformer 12 on the VOC discharge line 13. Hence, the VOC treatment unit 10 mixes the reformed VOC with liquefied gas, so that the engine for consuming methane can be operated without any problem even when the mixture of the liquefied gas and the VOC is supplied to the engine.

The VOC compressor 11, the reformer 12, and the mixer 27 may be provided on the VOC discharge line 13, and the VOC discharge line 13 transfers the VOC from the oil storage tank OT to the engine ME, GE, and DE. Since the VOC generated in the oil storage tank OT is reformed and then supplied to the engine ME, GE, and DE, the engine ME, GE, and DE can be stably operated.

The gas fuel supply line 23 for transferring liquefied gas from the gas fuel storage tank GT to the engine ME, GE, and DE may be connected to the VOC discharge line 13. A gas fuel evaporator 22 may be provided on the gas fuel supply line 23.

The gas fuel evaporator 22 may evaporate liquefied gas by using various heat sources. The liquefied gas may maintain a liquid phase while being stored at a high pressure in the gas fuel storage tank GT. The high-pressure liquefied gas having the liquid phase, which is discharged from the gas fuel storage tank GT may be heated to a required temperature or lower of the engine ME, GE, and DE while being evaporated in the gas fuel evaporator 22.

However, the reformed VOC discharged from the reformer 12 may have a temperature (e.g., 300 °C to 500 °C) higher than the required temperature of the engine ME, GE, and DE in a reforming process, and therefore, the gas fuel evaporator 22 may control heating of the liquefied gas according to a temperature of the VOC discharged from the reformer 12.

The control of the gas fuel evaporator 22 may be regulated together with a flow rate of the VOC transferred to the engine ME, GE, and DE, a flow rate of the liquefied gas discharged from the gas fuel storage tank GT, etc., in addition to a temperature of the VOC discharged from the reformer 12. To this end, it will be apparent that various types of sensors (not shown) may be provided in the VOC discharge line 13 and/or the gas fuel supply line 23.

The VOC compressor compresses the VOC at the required pressure of the engine ME, GE, and DE, and the gas fuel storage tank GT stores the liquefied gas at the required pressure of the engine ME, GE, and DE. Therefore, the VOC treatment unit 10 may mix the liquefied gas discharged from the gas fuel storage tank GT with the VOC compressed by the VOC compressor 11 without any separate compression (or through compression having a small ratio with respect to the VOC compressor 11), and supply the mixture to the engine ME, GE, and DE.

As described above, in this example, the VOC generated in the oil storage tank OT is used as fuel of the engine ME, GE, and DE operated by the liquefied gas. Thus, environmental pollution can be suppressed by efficiently consuming the VOC, and cost can be remarkably reduced without providing any facility for liquefying the VOC.

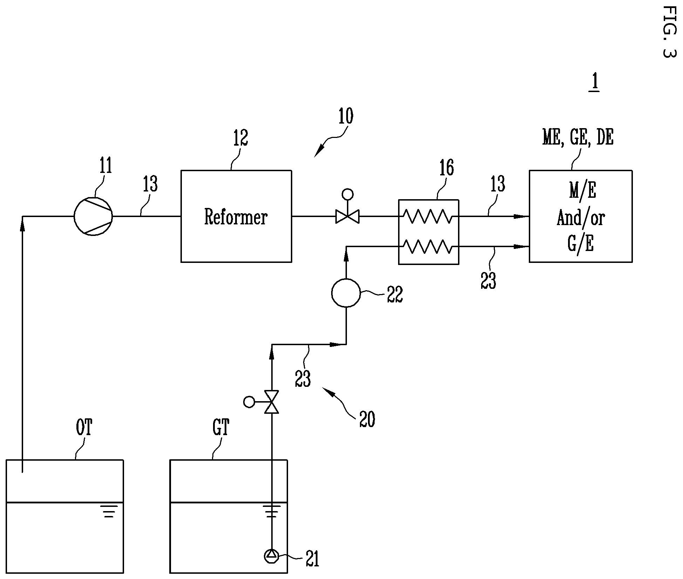

FIG. 3 is a conceptual view of a VOC treatment system in accordance with a second example.

Referring to FIG. 3, the VOC treatment system 1 in accordance with the second example may be provided with a heat exchanger 16 instead of the mixer 27, as compared with the above-described first example.

Hereinafter, in this example, portions different from those of the above-described example will be mainly described, and omitted descriptions will be derived from the foregoing example.

The heat exchanger 16 may be provided in a two-stream structure having a flow path through which the VOC flows and a flow path through which the liquefied gas flows. The flow path through which the VOC flows may be parallel to the VOC discharge line 13, and the flow path through which the liquefied gas flows may be parallel to the gas fuel supply line 23.

The VOC discharged from the reformer 12 may be in a considerably high temperature state. Therefore, in this example, the temperature of the VOC may be lowered to the required temperature of the engine ME, GE, and DE by using the liquefied gas which has a relatively low temperature.

That is, the heat exchanger 16 may allow the reformed VOC to be in a state suitable for the required temperature of the engine ME, GE, and DE by cooling the discharged VOC while heat-exchanging the VOC with the liquefied gas.

However, on the contrary, a temperature of the liquefied gas will be increased due to the heat exchange with the VOC. Therefore, in consideration of this, the gas fuel evaporator 22 may heat the liquefied gas to a temperature lower than the required temperature of the engine ME, GE, and DE. Alternatively, the gas fuel evaporator 22 may be omitted.

When the gas fuel evaporator 22 is omitted, the heat exchanger 16 has a space in which the liquefied gas is stored in a liquid phase, and may have a tank type structure which allows the VOC to be cooled while heating/evaporating the liquefied gas as the high-temperature VOC flows in the liquid-phase liquefied gas. The structure of the heat exchanger 16 is not particularly limited.

This example may have a structure in which the VOC discharge line 13 and the gas fuel supply line 23 are provided in parallel to each be connected to be each connected to the engine ME, GE, and DE. That is, the VOC is not be mixed with the liquefied gas but may be introduced to the engine ME, GE, and DE, to be mixed and used in the engine ME, GE, and DE.

It will be apparent that, unlike the drawing of this example, this example may be combined with the first example, to have a structure in which the gas fuel supply line 23 is connected to the VOC discharge line 13 at a downstream of the heat exchanger 16 and an upstream of the engine ME, GE, and DE.

That is, the present disclosure may include all modifications in which the VOC having a temperature higher than the required temperature of the engine ME, GE, and DE in a reforming process can be cooled to be suitable for the required temperature of the engine ME, GE, and DE by using the liquefied gas having a relatively low temperature.

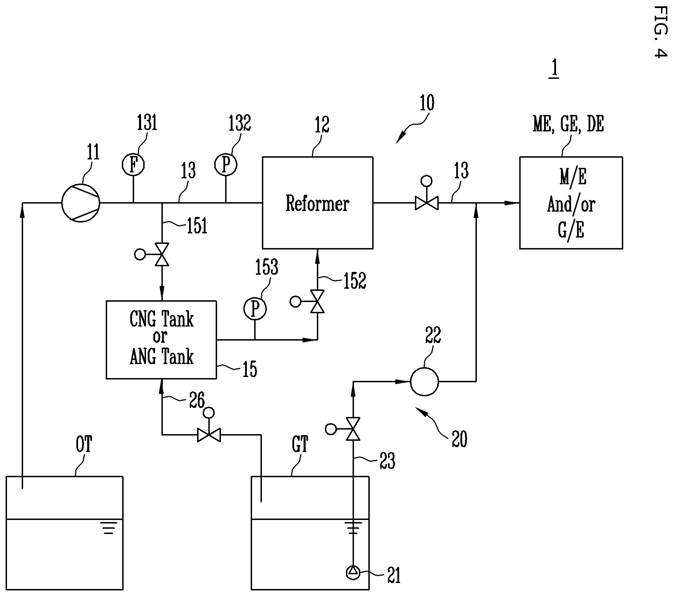

FIG. 4 is a conceptual view of a VOC treatment system in accordance with a third example.

Referring to FIG. 4, the VOC treatment system 1 in accordance with the third example further include a VOC storage tank 15.

The VOC storage tank 15 may temporarily store at least a portion of the compressed VOC. The VOC discharge line 13 is provided from the oil storage tank OT to the engine ME, GE, and DE. A portion of the VOC before the VOC is compressed by the VOC compressor 11 on the VOC discharge line 13 and then introduced to the reformer 12 may be transferred to the VOC storage tank 15 along a VOC storage line 151 to be stored in the VOC storage tank 15.

When the flow rate of the VOC generated in the oil storage tank OT exceeds an amount which can be consumed in the engine ME, GE, and DE, at least a portion of the VOC is not introduced to the reformer 12 at a downstream of the VOC compressor 12 but may be introduced to the VOC storage tank 15.

That is, according to a load of the engine ME, GE, and DE, a constant amount of the VOC may be transferred to the VOC storage tank 15 through the VOC storage line 151 branching off from an upstream of the reformer 12 on the VOC discharge line 13.

To this end, a flowmeter 131 for measuring a flow rate of the VOC may be provided in the VOC discharge line 13, and a valve (not indicated by a reference numeral) may be provided in the VOC discharge line 13 and/or the VOC storage line 151, so that the opening of the valve can be controlled according to a load of the flowmeter 131 and the engine ME, GE, and DE.

An evaporation gas generated in the gas fuel storage tank GT may be introduced to the VOC storage tank 15. To this end, an evaporation gas supply line 26 may be connected from the gas fuel storage tank GT to the VOC storage tank 15.

The VOC storage tank 15 may store surplus VOC which is not consumed in the engine ME, GE, and DE and the evaporation gas generated in the gas fuel storage tank GT. The VOC storage tank 15 may store the VOC, etc. at a pressure higher than that of the oil storage tank OT. In particular, the internal pressure of the VOC storage tank 15 may be regulated according to an amount of the evaporation gas transferred.

A mixture of the VOC and the evaporation gas, which is stored in the VOC storage tank 15, is transferred to the reformer 12 to be supplied to the engine ME, GE, and DE, if necessary. A VOC supply line 152 may be provided from the VOC storage tank 15 to the reformer 12. The mixture may be stored in the VOC storage tank 15 and then transferred to the reformer 12 according to an operation load of the engine ME, GE, and DE, a flow rate of the VOC discharged from the oil storage tank OT, an amount of the liquefied gas remaining in the gas fuel storage tank GT, etc.

The VOC discharge line 13 and the VOC supply line 152 may be individually connected to the reformer 12, and a ratio of methane in the mixture transferred from the VOC supply line 152 to the reformer 12 is higher than that of the VOC transferred from the VOC discharge line 13 to the reformer 12. The reformer 12 may perform reforming by considering a component of each of the introduced VOC and the introduced mixture, and a detailed chemical reaction may use a technique known in the art.

In addition, a pressure of the mixture may be higher than that of the VOC introduced to the reformer 12. In this example, pressure gauges 132 and 153 may be respectively provided in the VOC discharge line 13 and the VOC supply line 152, which are connected to the reformer 12, to control the VOC compressor 11 or various types of valves (not indicated by reference numerals) by considering a pressure difference.

As described above, in this example, when surplus VOC is generated, the surplus VOC is stored together with the evaporation gas in the VOC storage tank 15, and is subsequently supplied to the engine ME, GE, and DE, so that the efficiency of the system can be improved.

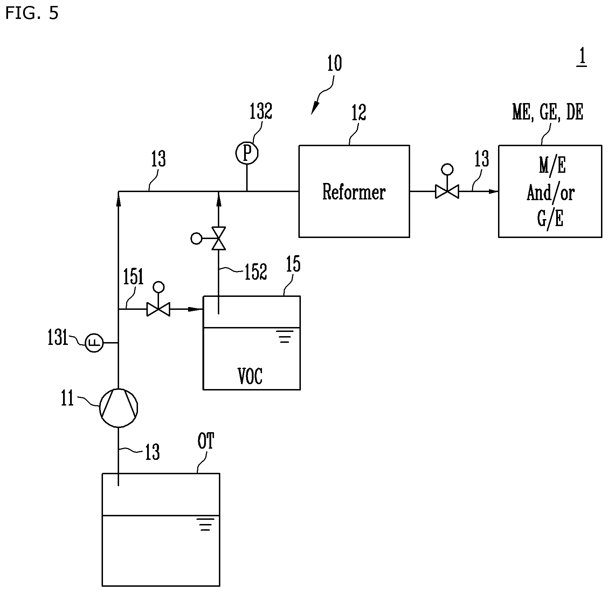

FIG. 5 is a conceptual view of a VOC treatment system in accordance with a fourth example.

Referring to FIG. 5, the VOC treatment system 1 in accordance with the fourth example includes the VOC storage tank 15, like the above-described third example, but may not include the gas fuel storage tank GT, unlike the above-described examples.

That is, in this example, the VOC generated in the oil storage tank OT may be supplied to the engine ME, GE, and DE via the VOC compressor 11 and the reformer 12, or at least a portion of the VOC may be compressed by the VOC compressor 11 and then stored in the VOC storage tank 15. The VOC storage tank may be a tank for storing the VOC including propane, butane, etc.

The VOC stored in the VOC storage tank 15 may be supplied to the engine ME, GE, and DE via the reformer 12, if necessary. The VOC supply line 152 may be connected from the VOC storage tank 15 to the reformer 12 or the VOC discharge line 13.

In a modified example, the VOC storage tank 15 may be provided on the VOC discharge line 13 such that the VOC storage tank 15 serves as a buffer tank between the oil storage tank OT and the reformer 12, and the VOC storage line 151, the VOC supply line 152, or the like may not be provided.

Also, in a modified example, when the engine ME, GE, and DE is an engine for consuming propane or butane instead of an engine for consuming methane, the reformer 12 may be omitted in this example. However, in order to allow the VOC to be suitable for the required temperature of the engine ME, GE, and DE, etc., a heater (not shown) for heating the VOC by using an unconfined heat medium such as seawater may be provided in replacement of the reformer 12.

As described above, in this example, the VOC is extracted and stored from the oil storage tank OT and then used, so that the system can be stably operated regardless of a change in amount of the VOC discharged.

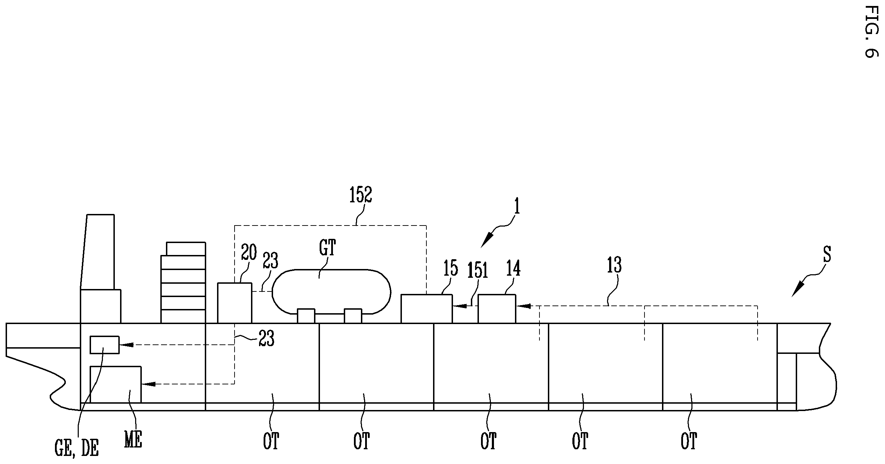

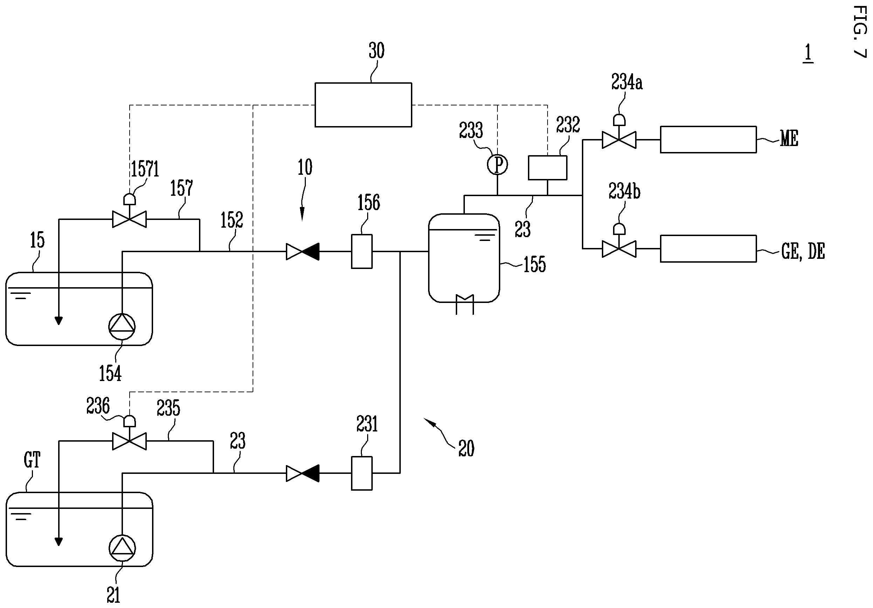

FIG. 6 is a side view of a ship having VOC treatment systems in accordance with fifth and sixth examples. FIG. 7 is a conceptual view of the VOC treatment system in accordance with the fifth example.

First, referring to FIG. 6, the ship S having a VOC treatment system 1 includes an oil storage tank OT, a VOC liquefier 14, a VOC storage tank 15, and a gas fuel storage tank GT.

The oil storage tank OT may be provided in the ship S, and a plurality of oil storage tanks OT may be disposed in a length direction in a hull. Oil such as crude oil, which is store in the oil storage tank OT, may have a liquid phase, and be stored in a room temperature state.

However, a VOC (propane, butane, etc.) of which the boiling point is higher than room temperature is mixed in the crude oil stored in the oil storage tank OT. The VOC is evaporated in the oil storage tank OT. The evaporated VOC may be treated by the VOC liquefier 14 to be transferred to the VOC storage tank 15.

The VOC liquefier 14 liquefies the VOC generated from the oil storage tank OT and transfers the liquefied VOC to the VOC storage tank 15. When the VOC is evaporated from the crude oil of the oil storage tank OT, the VOC increases the pressure of the oil storage tank OT, which may be problematic. Therefore, the VOC may be discharged to the outside for the purpose of the durability of the oil storage tank OT.

To this end, a VOC discharge line 13 is provided in the oil storage tank OT. The VOC discharge line 13 is connected to the VOC liquefier 14. The VOC liquefier 14 may cool the VOC in a gaseous state, which is transferred thereto, and the cooled VOC may be liquefied such that the volume of the VOC is remarkably reduced.

Various kinds of unconfined refrigerants may be used so as to liquefy the VOC. In an example, such a refrigerant may be nitrogen, liquefied gas, R134a, propane, etc. The VOC liquefier 14 may be a kind of heat exchanger for heat-exchanging the refrigerant with the VOC in the gaseous state.

The VOC storage tank 15 stores the VOC generated from the oil storage tank OT provided in the ship S. The VOC storage tank 15 may store the VOC in a liquid state, which is discharged in the gaseous state in the oil storage tank OT and then liquefied in the VOC liquefier 14. The VOC storage tank 15 may be heat-insulated to suppress re-evaporation of the VOC or have the shape of a high-pressure container so as to increase the boiling point.

The VOC storage tank 15 may be provided at the outside of the ship S. In an example, the VOC storage tank 15 may be provided on the top of an upper deck. Alternatively, the VOC storage tank 15 may be provided in a place except that in which the oil storage tank OT is disposed in the ship S. In an example, the VOC storage tank 15 may be provided in an engine room, between the engine room and a side plating, or the like.

The VOC discharged from the oil storage tank OT and then stored in the VOC storage tank 15 may be used as fuel of an engine ME, GE, and DE provided in the ship S. However, since the methane number of the VOC itself is low, efficiency may be lowered. Therefore, in the present disclosure, in order to improve the operation efficiency of the engine ME, GE, and DE by ensuring the methane number, liquefied gas may be mixed with the VOC to be transferred to the engine ME, GE, and DE.

The gas fuel storage tank GT stores the liquefied gas. When the ship S is a crude oil carrier having the oil storage tank OT as a cargo tank, the gas fuel storage tank GT is of type C, and may be mounted on the upper deck.

That is, the gas fuel storage tank GT may be a high-pressure storage container mounted on the upper deck, be placed at the front of a cabin on the upper deck, and be provided at a portside and/or a starboard.

The liquefied gas stored in the gas fuel storage tank GT may be mixed with the VOC of the VOC storage tank 15 to be supplied to the engine ME, GE, and DE. To this end, an auxiliary tank 155 which will be described later may be provided between the gas fuel storage tank GT and the engine ME, GE, and DE, and a gas fuel supply line 23 may be provided between the gas fuel storage tank GT and the auxiliary tank 155. A one-way valve (not indicated by a reference numeral), a flowmeter 231, and the like are provided in the gas fuel supply line 23.

The gas fuel storage tank GT may store the liquefied gas at a high pressure. When the internal pressure of the gas fuel storage tank GT is equal to or higher than a required pressure of the engine ME, GE, and DE, a gas fuel pump 21 which will be described later may be omitted.

Referring to FIG. 7, the VOC treatment system 1 in accordance with the fifth example includes a fuel treatment unit 10 and 20 for mixing the VOC and the liquefied gas, which are respectively stored in the VOC storage tank 15 and the gas fuel storage tank GT, and supplying the mixture as fuel of the engine ME, GE, and DE.

For reference, the fuel treatment unit 10 and 20 includes a VOC treatment unit 10 including components used to treat the VOC and a gas fuel treatment unit 20 including components used to treat gas fuel.

The engine ME, GE, and DE is mounted in the ship S, and may be a propulsion engine ME for propelling the ship S or a generator engine GE and DE for supplying power to the inside of the ship S. In an example, the propulsion engine ME may be an X-DF engine having a required pressure of 10 to 50 bar (e.g., about 16 bar), and the generator engine GE and DE may be a DFDE engine having a required pressure 1 to 10 bar (e.g., about 6 bar).

The fuel treatment unit 10 and 20 may control the methane number of fuel supplied to the engine ME, GE, and DE by regulating the flow rate of the VOC and the liquefied gas. When the propulsion engine ME is the X-DF engine (Otto cycle engine), the methane number of the VOC is low. Hence, when only the VOC is used as a single fuel, knocking may occur.

Therefore, in order to achieve smoothing combustion and to prevent a knocking phenomenon, the fuel treatment unit 10 and 20 may mix the liquefied gas with the VOC at an appropriate ratio, thereby satisfying a methane number required for each load in the engine ME, GE, and DE.

To this end, the fuel treatment unit 10 and 20 may include a gas analyzer 232, the auxiliary tank 155, and a control unit 30.

The gas analyzer 232 measures a methane number of the fuel supplied from the auxiliary tank 155 to the engine ME, GE, and DE. However, in this specification, it is noted that the methane number includes all data of the fuel, such as a component or calorie of the fuel. That is, the gas analyzer 232 of the present disclosure may be a caloric measurer, an element measurer, or the like.

The auxiliary tank 155 mixes the VOC and the liquefied gas at an upstream of the engine ME, GE, and DE. A substance obtained by mixing the VOC and the liquefied gas in the auxiliary tank 155 may be designated as fuel in this specification.

The gas fuel supply line 23 may be provided from the auxiliary tank 155 to the engine ME, GE, and DE, and a pressure gauge 233 may be provided in the gas fuel supply line 23 to verify whether a pressure of the fuel corresponds to that required in the engine ME, GE, and DE.

When the engine ME, GE, and DE includes the X-DF propulsion engine ME and the DFDE generator engine GE and DE, the gas fuel supply line 23 may branch off at a downstream of the auxiliary tank 155, to be connected to the propulsion engine ME and the generator engine GE and DE. Pressure regulating valves 234a and 234b may be respectively provided at an upstream of the propulsion engine ME and an upstream of the generator engine GE and DE from a downstream of the branch-off point.

The fuel discharged from the auxiliary tank 155 may have a pressure suitable for a higher one of a required pressure of the propulsion engine ME and a required pressure of the generator engine GE and DE, and therefore, the pressure regulating valve 234b provided at the upstream of the generator engine GE and DE may implement decompression.

The auxiliary tank 155 may generate fuel in a liquid phase by mixing VOC in a liquid phase, which is transferred through a VOC pump 154 and liquefied gas in a liquid phase, which is transferred through the gas fuel pump 21, and supply the fuel in the liquid phase to the engine ME, GE, and DE. Alternatively, the auxiliary tank 155 may be provided with a heater (not indicated by a reference numeral) for evaporating fuel so as to supply the fuel in a gas phase to the engine ME, GE, and DE.

The heater may be provided at the inside of the auxiliary tank 155 or be provided in a separate external line through which the fuel is circulated. The heater may use various substances such as steam or glycol water. The fuel evaporated by the heater may be supplied and consumed in the engine ME, GE, and DE via the pressure gauge 233, the gas analyzer 232, the pressure regulating valves 234a and 234b, and the like.

The control unit 30 controls the flow rate of the VOC and/or the liquefied gas, introduced to the auxiliary tank 155. Therefore, the ratio of the VOC and the liquefied gas, which are included in the fuel generated in the auxiliary tank 155, may be controlled by the control unit 30.

The control unit 30 may control the flow rate of the VOC and/or the liquefied gas, transferred to the auxiliary tank 155, by using various methods. In an example, the VOC pump 154 for transferring the VOC to the engine ME, GE, and DE may be provided at the inside and/or the outside of the VOC storage tank 15, and the gas fuel pump 21 for transferring the liquefied gas to the engine ME, GE, and DE may be provided at the inside and/or the outside of the gas fuel storage tank GT. The control unit 30 controls the VOC pump 154 and the gas fuel pump 21.

The control unit 30 may set the methane number of the fuel generated in the auxiliary tank 155 to a level required in the engine ME, GE, and DE by controlling the VOC pump 154 and the gas fuel pump 21 according to a measurement value of the gas analyzer 232.

To this end, the VOC pump 154 and/or the gas fuel pump 21 may be provided such that Variable Frequency Drive (VFD) is possible. However, it will be apparent that any one of the VOC pump 154 and the gas fuel pump 21 is provided as a fixed capacity type pump and the other of the VOC pump 154 and the gas fuel pump 21 is provided as a variable capacity type pump. The control unit 30 may control the variable capacity type pump by considering an operation (On/Off) of the fixed capacity type pump.

When the internal pressure of the gas fuel storage tank GT is equal to or higher than the required pressure of the engine ME, GE, and DE as described above, the gas fuel pump 21 may be omitted, and therefore, the control unit 30 may regulate the methane number through operation control of the VOC pump 154. When the gas fuel pump 21 is omitted, a valve (not shown) may be provided on the gas fuel supply line 23, and therefore, the control unit 30 may control the methane number through the valve on the VOC pump 154 and the gas fuel supply line 23.

A VOC supply line 152 provided with a one-way valve (not indicated by a reference numeral), a flowmeter 156, or the like may be provided from the VOC storage tank 15 to the auxiliary tank 155, and a VOC return line 157 for returning at least a portion of the VOC to the VOC storage tank 15 may be provided at a downstream of the VOC pump 154 on the VOC supply line 152. A VOC return valve 1571 as a return valve may be provided on the VOC return line 157.

Also, identically/similarly, a gas fuel return line 235 for returning at least a portion of the liquefied gas discharged from the gas fuel storage tank GT may be provided on the gas fuel supply line 23, and a gas fuel return valve 236 as a return valve may be provided on the gas fuel return line 235.

The control unit 30 may allow a flow rate of the VOC transferred to the engine ME, GE, and DE by the VOC return valve 1571 and/or a flow rate of the liquefied gas transferred to the engine ME, GE, and DE by the gas fuel return valve 236 to be regulated by controlling the VOC return valve 1571 and/or the gas fuel return valve 236 according to a measurement value of the gas analyzer 232, so that the methane number of the fuel can be set to the level required in the engine ME, GE, and DE.

The control unit 30 may use the flowmeters 156 and 231 to check whether the flow rates of the VOC and the liquefied gas, which are introduced to the auxiliary tank 155, are appropriately controlled, when the VOC pump 154 and the gas fuel pump 21, and/or the VOC return valve 1571 and the gas fuel return valve 236 are controlled. The flowmeters 156 and 231 may be respectively provided in the VOC supply line 152 and the gas fuel supply line 23.

Thus, the control unit 30 actively controls the flow rates of the VOC and the liquefied gas, which are introduced to the auxiliary tank 155, by measuring the methane number of the fuel at the downstream of the auxiliary tank 155, and ensure an appropriate methane number by verifying whether the flow rates of the VOC and the liquefied gas are appropriately controlled.

As described above, in this example, the VOC discharge in the air is used as the fuel of the engine ME, GE, and DE, and the liquefied gas is mixed with the VOC to be supplied to the engine ME, GE, and DE so as to satisfy data (a methane number, a calorie, a component, etc.) of the fuel required in the engine ME, GE, and DE. Accordingly, the VOC can be recycled, and the operation efficiency of the engine ME, GE, and DE can be ensured.

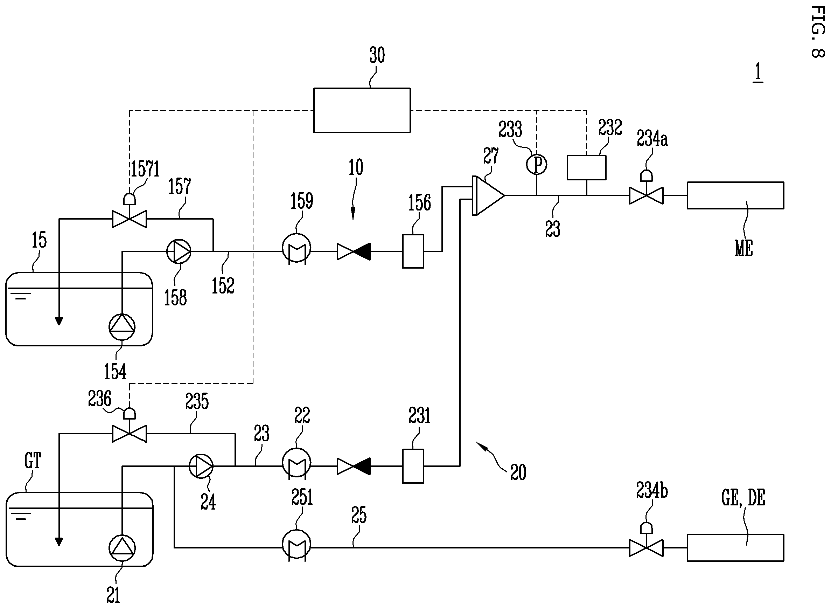

FIG. 8 is a conceptual view of the VOC treatment system in accordance with the sixth example.

Referring to FIG. 8, the VOC treatment system 1 in accordance with the sixth example may mix the VOC and the liquefied gas to be supplied to the propulsion engine ME, and supply only the liquefied gas to the generator engine GE and DE. Hereinafter, in this example, portions different from those of the above-described example will be mainly described, and omitted descriptions will be derived from the foregoing example.

In this example, the propulsion engine ME may be an ME-GI engine having a required pressure of 200 to 400 bar (e.g., about 380 bar). However, in the case of the ME-GI, when only the VOC (a caloric value per volume, which is injected into the engine ME, GE, and DE, is higher than that of methane as a main component of the liquefied gas) is supplied, energy density is extremely increased. Therefore, the liquefied gas is mixed with the VOC, so that operation stability can be ensured.

In order to satisfy a required pressure of the ME-GI, a VOC high-pressure pump 158 and a gas fuel high-pressure pump 24 may be respectively provided on the VOC supply line 152 between the VOC storage tank 15 and the auxiliary tank 155 and the gas fuel supply line 23 between the gas fuel storage tank GT and the auxiliary tank 155, and a mixer 27 may be provided in replacement of the auxiliary tank 155 of the above-described example so as to mix high-pressure VOC and high-pressure liquefied gas and supply the mixture in one phase state to the propulsion engine ME without phase separation.

However, when the VOC pump 154 and the gas fuel pump 21 pressurize the VOC, etc. to be suitable for a required pressure of the propulsion engine ME or when only one high-pressure pump (not shown) is provided at the downstream of the auxiliary tank 155 by using the auxiliary tank 155 instead of the mixer 27, the VOC high-pressure pump 158 and the gas fuel high-pressure pump 24 may be omitted.

A VOC evaporator 159 and a gas fuel evaporator 22 may be respectively provided between the VOC pump 154 and the mixer 27 and between the gas fuel pump 21 and the mixer 27. The VOC evaporator 159 and the gas fuel evaporator 22 may respectively heat the VOC and the liquefied gas, corresponding to the required pressure of the propulsion engine ME. It will be apparent that a heat exchanger (not shown) may be provided at a downstream of the mixer 27 in replacement of the VOC evaporator 159 and the gas fuel evaporator 22.

In this example, a gas fuel branch-off line 25 may be provided from the gas fuel supply line 23 to the generator engine GE and DE. The gas fuel branch-off line 25 may branch off from the gas fuel supply line 23 between the gas fuel pump 21 and the gas fuel high-pressure pump 24 to transfer the liquefied gas to the generator engine GE and DE.

In the above-described example, the difference in required pressure between the propulsion engine ME and the generator engine GE and DE is a level which can be covered with the pressure regulating valve 234b. On the other hand, in this example, since the required pressure of the propulsion engine ME is a high pressure of 200 bar or higher, it may be difficult to solve the difference in required pressure between the propulsion engine ME and the generator engine GE and DE through the pressure regulating valve 234b.

Therefore, in this example, the required pressure of the propulsion engine ME may be set by providing the gas fuel high-pressure pump 24, etc. at the propulsion engine ME as a line branches off, and the required pressure of the generator engine GE and DE may be set by supplying, to the generator engine GE and DE, the liquefied gas before the liquefied gas is compressed at a high pressure by the gas fuel high-pressure pump 24.

It will be apparent that, in such a configuration, the pressure regulating valves 234a and 234b may be respectively provided at an upstream of the propulsion engine ME and an upstream of the generator engine GE and DE. In addition to the pressure regulating valve 234b, a gas fuel heater 251 may be provided in the gas fuel branch-off line 25.

As described above, in this example, when the high-pressure propulsion engine ME of 200 bar or higher, energy density is set by mixing the VOC and the liquefied gas, so that the operation efficiency of the propulsion engine ME, etc. can be ensured while utilizing the VOC without discharge.

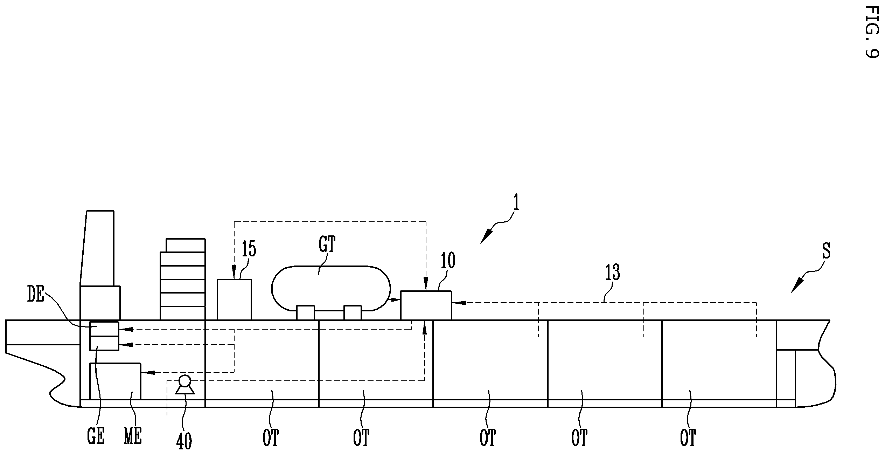

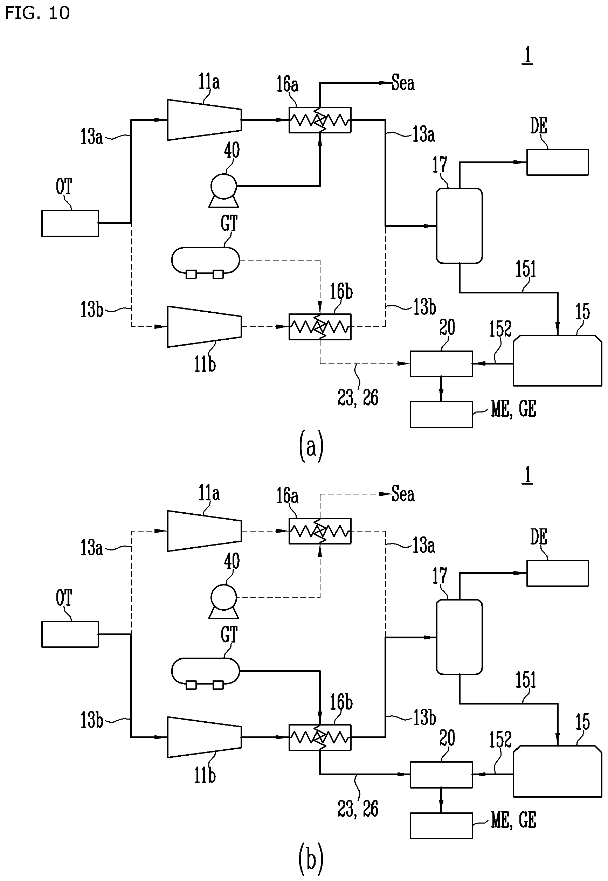

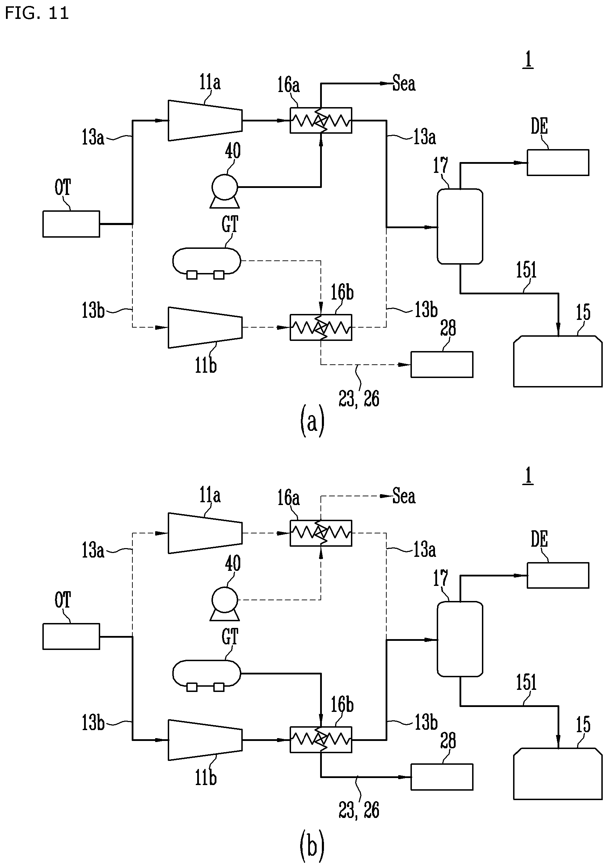

FIG. 9 is a conceptual view of a ship including VOC treatment systems in accordance with seventh to eleventh examples. FIG. 10 is a conceptual view of the VOC treatment system in accordance with the seventh example. FIG. 11 is a conceptual view of the VOC treatment system in accordance with the eighth example.

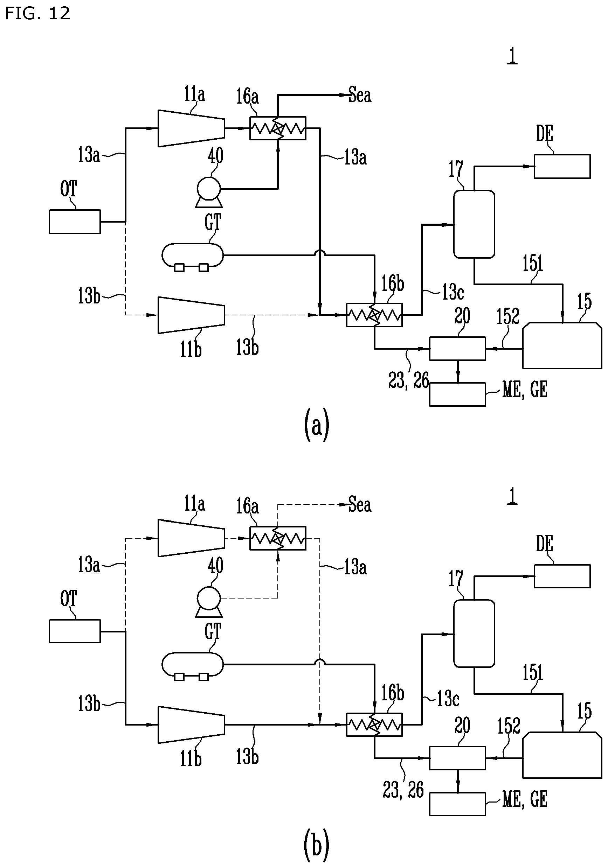

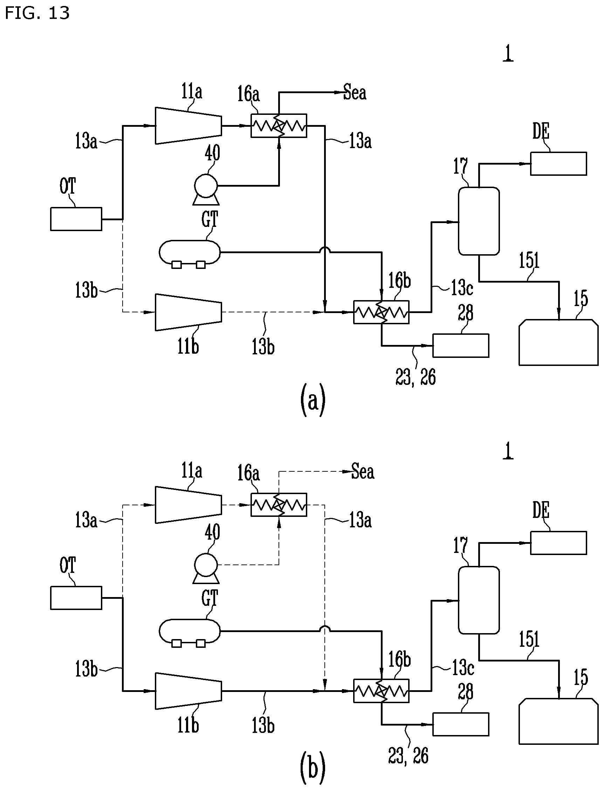

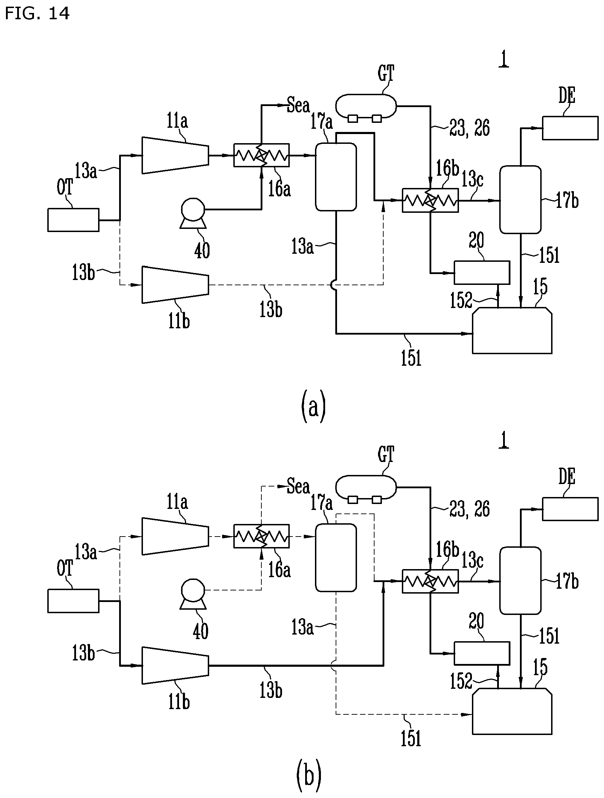

FIG. 12 is a conceptual view of the VOC treatment system in accordance with the ninth example. FIG. 13 is a conceptual view of the VOC treatment system in accordance with the tenth example. FIG. 14 is a conceptual view of the VOC treatment system in accordance with the eleventh example.

Before a VOC treatment system 1 is described in detail, a ship S having the VOC treatment system 1 will be first described with reference to FIG. 9.

Referring to FIG. 9, the ship S having the VOC treatment system 1 includes an oil storage tank OT, a VOC storage tank 15, a gas fuel storage tank GT, a VOC treatment unit 10, a source ME, GE, and DE of demand, and a seawater pump 40.

The oil storage tank OT may be provided in the ship S, and a plurality of oil storage tanks OT may be disposed in a length direction in a hull. Oil such as crude oil, which is store in the oil storage tank OT, may have a liquid phase, and be stored in a room temperature state.

However, a VOC (propane, butane, etc.) of which the boiling point is higher than room temperature is mixed in the crude oil stored in the oil storage tank OT. The VOC is evaporated in the oil storage tank OT. The evaporated VOC may be treated by the VOC treatment unit 10 to be transferred to the VOC storage tank 15.

The VOC storage tank 15 stores the VOC generated from the oil storage tank OT provided in the ship S. The VOC storage tank 15 may store the VOC in a liquid state, which is discharged in the gaseous state in the oil storage tank OT and then liquefied in the VOC liquefier 14. The VOC storage tank 15 may be heat-insulated to suppress re-evaporation of the VOC or have the shape of a high-pressure container so as to increase the boiling point.

The VOC storage tank 15 may be provided at the outside of the ship S. In an example, the VOC storage tank 15 may be provided on the top of an upper deck. Alternatively, the VOC storage tank 15 may be provided in a place except that in which the oil storage tank OT is disposed in the ship S. In an example, the VOC storage tank 15 may be provided in an engine room, between the engine room and a side plating, or the like.

The VOC discharged from the oil storage tank OT and then stored in the VOC storage tank 15 may be used as fuel of a main engine ME or a generator engine GE, which is provided in the ship S. However, since the methane number of the VOC itself is low, efficiency may be lowered. Therefore, in the present disclosure, in order to improve the operation efficiency of the main engine ME or the generator engine GE by ensuring the methane number, a separate reformer (reformer 12) may be provided to set the methane number and then supply the VOC to the main engine ME or the generator engine GE, or liquefied gas may be mixed with the VOD to be supplied to the main engine ME or the generator engine GE.

The gas fuel storage tank GT stores the liquefied gas. When the ship S is a crude oil carrier having the oil storage tank OT as a cargo tank, the gas fuel storage tank GT is of type C, and may be mounted on the upper deck.

That is, the gas fuel storage tank GT may be a high-pressure storage container mounted on the upper deck, be placed at the front of a cabin on the upper deck, and be provided at a portside and/or a starboard.

The liquefied gas stored in the gas fuel storage tank GT may be supplied to the VOC treatment unit 10 to be used in cooling the VOC. Also, the liquefied gas may be mixed with the VOC of the VOC storage tank 15 to be supplied to the main engine ME or the generator engine GE.

The VOC treatment unit 10 liquefies the VOC generated from the oil storage tank OT and transfers the liquefied VOC to the VOC storage tank 15 or the source ME, GE, and DE of demand. When the VOC is evaporated from the crude oil of the oil storage tank OT, the VOC increases the pressure of the oil storage tank OT, which may be problematic. Therefore, the VOC may be discharged to the outside for the purpose of the durability of the oil storage tank OT.

To this end, a VOC discharge line 13 is provided in the oil storage tank OT. The VOC discharge line 13 is connected to the VOC treatment unit 10. The VOC treatment unit 10 may cool the VOC in a gaseous state, which is transferred thereto, and the cooled VOC may be liquefied such that the volume of the VOC is remarkably reduced.

Examples of a configuration of the VOC treatment unit 10 will be described in detail later with reference to FIGS. 10 to 14.

The source ME, GE, and DE of demand may consume the liquefied gas, evaporation gas, or the VOC, and include the main engine ME, the generator engine GE, and the other source DE of demand.

The main engine ME generates power required to propel the ship S, and may be, for example, a low-speed two-stroke low-pressure gas injection engine (X-DF) having a required pressure of 10 to 50 bar (e.g., about 16 bar).

The generator engine GE generates electric power necessary for the ship S, and may be, for example, a dual fuel engine (DFDE) having a required pressure of 1 to 10 bar (e.g., about 6 bar).

The other source DE of demand consumes a gaseous component of the VOC, and may be, for example, a boiler or a gas combustion unit. The gaseous component may be discharged in the air, or be stored in an arbitrary storage medium in a state in which the gaseous component is compressed. However, hereinafter, the other source DE of demand may be substituted for the main engine ME, the generator engine GE, or the like.

The seawater pump 40 may supply seawater to the VOC treatment unit 10 such that the seawater can cool the VOC. The seawater pump 40 may apply a certain pressure to the seawater so as to compensate for a height head which may occur due to a difference in height between the VOC treatment unit 10 and the seawater pump 40 when the VOC treatment unit 10 is disposed on the upper deck.

FIG. 10 is a conceptual view of the VOC treatment system in accordance with the seventh example.

Referring to FIG. 10, the VOC treatment system 1 in accordance with the seventh example includes a first VOC compressor 11a, a second VOC compressor 11b, a first heat exchanger 16a, a second heat exchanger 16B, a gas-liquid separator 17, and the like, which correspond to the VOC treatment unit 10, and further includes a gas fuel treatment unit 10 and a control unit 30.

Before individual components of the VOC treatment system 1 in accordance with the seventh example are described, basic flow paths organically connecting the individual components will be described. The flow path may be a line as a path through which fluid flows. However, the present disclosure is not limited thereto, and any flow path is available as long as it is a component through which fluid flows.

The VOC treatment system 1 in accordance with the seventh example may further include a first VOC discharge line 13a and a second VOC discharge line 13b.

A valve (not shown) capable of regulating an opening may be installed in each line, and the supply amount of evaporation gas or liquefied gas may be controlled according to the opening regulation of each valve.

The first VOC discharge line 13a may be connected to the VOC discharge line 13 connected from the oil storage tank OT to connect the gas-liquid separator 17. The first VOC discharge line 13a may be formed in parallel to the second VOC discharge line 13b, and have the first VOC compressor 11a and the first heat exchanger 16a.

The second VOC discharge line 13b may be connected to the VOC discharge line 13 connected from the oil storage tank OT to connect the gas-liquid separator 17. The second VOC discharge line 13b may be formed in parallel to the first VOC discharge line 13a, and have the second VOC compressor 11b and the second heat exchanger 16b.

A three-way valve (not shown) may be disposed at a position at which the first and second VOC discharge lines 13a and 13b branch off from the VOC discharge line 13, and where the VOC is to be supplied to the first VOC discharge line 13a or the second VOC discharge line 13b may be controlled according to opening control of the three-way valve.

Hereinafter, individual components which are organically formed by each of the described-above lines 13a and 13b to implement the VOC treatment system 1 will be described.

The first VOC compressor 11a may compress the VOC generated from the oil storage tank OT provided in the ship S, and be disposed in parallel to the second VOC compressor 11b. The first VOC compressor 11a may have a treatment capacity greater than that of the second VOC compressor 11b, and be operated at a time at which crude oil is loaded into the oil storage tank OT.

Specifically, the first VOC compressor 11a may be provided at an upstream of the first heat exchanger 16a on the first VOC discharge line 13a, to be supplied with and compress the VOC generated from the oil storage tank OT and then supply the compressed VOC to the first heat exchanger 16a.

The second VOC compressor 11b may compress the VOC generated from the oil storage tank OT provided in the ship S, and be disposed in parallel to the first VOC compressor 11a. The second VOC compressor 11b may have a treatment capacity smaller than that of the first VOC compressor 11a, and be operated at a time at which the crude oil is transferred after the crude oil is completely loaded into the oil storage tank OT.

Specifically, the second VOC compressor 11b may be provided at an upstream of the second heat exchanger 16b on the second VOC discharge line 13b, to be supplied with and compress the VOC generated from the oil storage tank OT and then supply the compressed VOC to the second heat exchanger 16b.

The first heat exchanger 16a cools the VOC compressed by the first VOC compressor 11a through seawater supplied from the seawater pump 40. The first heat exchanger 16a may supply a large amount of cold heat as compared with the second heat exchanger 16b, and be operated at a time at which the crude oil is loaded into the oil storage tank OT.

The first heat exchanger 16a may heat-exchange the VOC compressed from the first VOC compressor 11a and the seawater with each other, and supply the heat-exchanged VOC to the gas-liquid separator 17. The heat-exchanged seawater may be discharged to sea Sea.

The second heat exchanger 16b cools the VOC compressed by the second VOC compressor 11b through liquefied gas or evaporation gas, supplied from the gas fuel storage tank GT. The second heat exchanger 16b may supply a small amount of cold heat as compared with the first heat exchanger 16a, and be operated at a time at which the crude oil is transferred after the crude oil is completely loaded into the oil storage tank OT.

The second heat exchanger 16b may heat-exchange the VOC compressed from the second VOC compressor 11b and the liquefied gas or evaporation gas with each other, and supply the heat-exchanged VOC to the gas-liquid separator 17. The heat-exchanged liquefied gas or evaporation gas may be supplied to the gas fuel treatment unit 20 to be used as fuel of the main engine ME or the generator engine GE.

The gas-liquid separator 17 may be supplied with the VOC which is cooled from the first and second heat exchangers 16a and 16b such as at least a portion of the VOC is reliquefied, to separate the VOC into a gas phase and a liquid phase.

The gas-liquid separator 17 may supply the separated VOC in the gas phase to the other source DE of demand, and supply the separated VOC in the liquid phase to the VOC storage tank 15.

The gas fuel treatment unit 20 may be supplied with the VOC stored in the VOC storage tank 15 and the liquefied gas or evaporation gas heat-exchanged with the VOC in the second heat exchanger 16b, to be treated as fuel available in the main engine ME or the generator engine GE.

To this end, the gas fuel treatment unit 20 may include a gas fuel pump 21, a gas fuel evaporator 22, and the like, which treat the liquefied gas or evaporation gas.

The gas fuel pump 21 may be supplied with the liquefied gas heat-exchanged from the second heat exchanger 16b to compress the liquefied gas to be suitable for a pressure which the main engine ME or the generator engine GE require. When gas heat-exchanged from the second heat exchanger 16b is the evaporation gas, the evaporation gas may be compressed by an evaporation gas compressor (not shown) separately provided to be suitable for the pressure which the main engine ME or the generator engine GE require.

The gas fuel evaporator 22 may evaporate the liquefied gas supplied from the gas fuel pump 21, and heat the liquefied gas to be suitable for a temperature which the main engine ME or the generator engine GE require.

The gas fuel treatment unit 20 may further include a VOC compressor 11 and a reformer 12, which are some components of the VOC treatment unit 10.

The VOC compressor 11 may be supplied with the VOC from the VOC storage tank 15 to compress the VOC at a required pressure of the main engine ME or the generator engine GE. In an example, the VOC compressor 11 may compress the VOC at about 10 to 50 bar.

The VOC compressor 11 may be provided in multiple stages, and a middle cooler may be provided between the VOC compressors 11 provided in the multiple stages. Also, the VOC compressors 11 may be provided in parallel to back up each other.

The reformer 12 may reform the compressed VOC and supply the reformed to the main engine ME or the generator engine GE. The reformer 12 may chemically treat the VOC including propane, butane, etc., thereby performing methanation. Chemical reaction caused by the reformer 12 has already been known in the art, and therefore, a detailed description will be omitted.

Also, a mixer 27 may be additionally installed in the gas fuel treatment unit 20. The mixer 27 may branch off at a downstream of the reformer 12 and branch off at a downstream of the evaporator. The mixer 27 may mix the VOC reformed by the reformer 12 with the liquefied gas evaporated by the evaporator or the evaporation gas compressed by the evaporation compressor and then supply the mixture to the main engine ME or the generator engine GE.

The control unit 30 may control the first and second VOC compressors 11a and 11b and the first and second heat exchangers 16a and 16b to be operated or not to be operated according to whether the crude oil is to be loaded into the oil storage tank OT or whether the crude oil is to be transferred after the crude oil is loaded.

The control unit 30 may be connected by wire or wireless to the first and second VOC compressors 11a and 11b and the first and second heat exchangers 16a and 16b to control the first and second VOC compressors 11a and 11b and the first and second heat exchangers 16a and 16b. The control unit 30 may be connected by wire or wireless to the three-way valve formed at the position at which the first and the second VOC discharge lines 13a and 13b branch off from the VOC discharge line 13, to control the three-way valve.

Specifically, when the crude oil is loaded into the oil storage tank OT, the control unit 30 may control the three-way valve such that a large amount of VOC generate in the oil storage tank is supplied from the VOC discharge line 13 to the first VOC discharge line 13a, and control at least a portion of the VOC to be reliquefied by compressing the large amount of VOC through the first VOC compressor 11a and then cooling the VOC through heat exchange with seawater in the first heat exchanger 16a.

Also, when the crude oil is transferred after the crude oil is loaded into the oil storage tank OT, the control unit 30 may control the three-way valve such that a small amount of VOC generated in the oil storage tank OT is supplied from the VOC discharge line 13 to the second VOC discharge line 13b, and control at least a portion of the VOC to be reliquefied by compressing the small amount of VOC through the second VOC compressor 11b and then cooling the VOC through heat exchange with the liequfied gas or evaporation gas in the second heat exchanger 16b. The VOC of which at least a portion is reliquefied may be supplied to the gas-liquid separator 17.

Driving according to organic coupling of the components of the VOC treatment system 1 in accordance with the seventh example will be described below with reference to FIGS. (a) and (b) of FIG. 10.

(a) of FIG. 10 is a flowchart of the VOC in the VOC treatment system in accordance with the seventh example when the crude oil is loaded into the oil storage tank, and (b) of FIG. 10 is a flowchart of the VOC in the VOC treatment system in accordance with the seventh example when the crude oil is transferred after the crude oil is loaded into the oil storage tank.

In a period in which the crude oil is loaded in the oil storage tank OT, a larger amount of VOC is generated than that of VOC generated in a process of transferring the crude oil after the crude oil is completely loaded into the oil storage tank OT. Therefore, a compressor and a heat exchanger (cooling unit), which can treat a large amount of VOC, are required.

On the contrary, in a period in which the crude oil is transferred after the crude oil is completely loaded in the oil storage tank OT, a considerably smaller amount of VOC is generated than that of VOC generated in a process of loading the crude oil into the oil storage tank OT. Therefore, a compressor and a heat exchanger (cooling unit), which can treat a small amount of VOC, are required.

However, the period in which the crude oil is transferred after the crude oil is completely loaded in the oil storage tank OT is maintained longer than that in which the crude oil is loaded in the oil storage tank OT. Therefore, when only a compressor and a heat exchanger, which can treat the VOC generated in the period in which the crude oil is loaded in the oil storage tank OT are provided, waste of energy may become considerably serious, driving of the compressor may be inefficiently performed, and driving energy of the heat exchanger may be wasted.

Accordingly, the VOC compressor 11 for compressing the VOC and the heat exchanger 16 for cooling the VOC are divided for each treatment capacity, and kinds of compressors and heat exchangers, which are driven according to an amount of VOC generated, are differentiated, so that loss of power consumed can be prevented and optimized energy can be consumed.

That is, in the example, the first VOC compressor 11a and the first heat exchanger 16a using seawater having a large amount of cold heat are driven in the period in which the crude oil is loaded into the oil storage tank OT, and the second VOC compressor 11b and the second heat exchanger 16b using liquefied gas or evaporation gas having a small amount of cold heat are driven in the period in which the crude oil is transferred after the crude oil is completely loaded into the oil storage tank OT, so that loss of power consumed can be prevented and optimized energy can be consumed.

Specifically, the flow of a solid line in (a) of FIG. 10 will be described. A large amount of VOC is generated in the oil storage tank OT when the crude oil is loaded into the oil storage tank OT. The oil storage tank OT supplies the VOC to the first VOC discharge line 13a through the VOC discharge line 13.

The VOC supplied to the first VOC discharge line 13a is supplied to the first VOC compressor 11a to be compressed, and then supplied to the first heat exchanger 16a to be supplied with cold heat from the seawater, so that at least a portion of the VOC is reliquefied.

The VOC of which at least a portion is reliquefied is supplied to the gas-liquid separator 17 to be separated into a gas phase and a liquid phase. The VOC in the gas phase is supplied and consumed in the other source DE of demand, and the VOC in the liquid phase is supplied and stored in the VOC storage tank 15.

The seawater heat-exchanged with the VOC may be again discharged to the sea Sea.

As described above, the large amount of VOC generated when the crude oil is loaded into the oil storage tank OT can be treated through the first VOC compressor 11a and the first heat exchanger 16a, and thus the stability of the system can be improved.

The flow of a solid line in (b) of FIG. 10 will be described. A small amount of VOC is generated in the oil storage tank OT when the crude oil is transferred after the crude oil is loaded into the oil storage tank OT. The oil storage tank OT supplies the VOC to the second VOC discharge line 13b through the VOC discharge line 13.

The VOC supplied to the second VOC discharge line 13b is supplied to the second VOC compressor 11b to be compressed, and then supplied to the second heat exchanger 16 to be supplied with cold heat from seawater, so that at least a portion of the VOC is reliquefied.

The VOC of which at least a portion is reliquefied is supplied to the gas-liquid separator 17 to be separated into a gas phase and a liquid phase. The VOC in the gas phase is supplied and consumed in the other source DE of demand, and the VOC in the liquid phase is supplied and stored in the VOC storage tank 15.

As described above, the small amount of VOC generated when the crude oil is transferred after the crude oil is loaded into the oil storage tank OT can be treated through the second VOC compressor 11b and the second heat exchanger 16b, which have a small-amount treatment ability, instead of the first VOC compressor 11a and the first heat exchanger 16a, which have a large-amount treatment ability, so that the power consumption of the system can be optimized and the waste of energy can be reduced.

The liquefied gas or evaporation gas, heat-exchanged with the VOC, may be supplied to the gas fuel treatment unit 20 to be treated and then be used as fuel of the main engine ME or the generator engine GE, or be mixed with the VOC supplied from the VOC storage tank 15 to be used as fuel of the main engine ME or the generator engine GE.

FIG. 11 is a conceptual view of the VOC treatment system in accordance with the eighth example.

Referring to FIG. 11, the VOC treatment system 1 in accordance with the eighth example may be provided with a gas fuel liquefier 28 in replacement of the gas fuel treatment unit 20, as compared with the above-described seventh example.

Hereinafter, in this example, portions different from those of the above-described example will be mainly described, and omitted descriptions will be derived from the foregoing example. It is noted that this is the same as the following examples.

The gas fuel liquefier 28 may reliquefy liquefied gas or evaporation gas through a refrigerant such as nitrogen, liquefied gas, R134a or propane. The liquefied gas refers to liquefied gas which is heated and then liquefied.

The gas fuel liquefier 28 may be supplied with evaporation gas heated or liquefied gas evaporated by being heat-exchanged with the VOC compressed through the second heat exchanger 16b, to reliquefy the evaporation gas or the liquefied gas through the refrigerant such as nitrogen, liquefied gas, R134a or propane.

The reliquefaction configuration and reliquefaction operation of the gas fuel liquefier 28 have already been known in the art, and therefore, a detailed description will be omitted.

Driving according to organic coupling of the components of the VOC treatment system 1 in accordance with the eighth example through the above-described gas fuel liquefier 28 will be described below with reference to FIGS. (a) and (b) of FIG. 11.

(a) of FIG. 11 is a flowchart of the VOC in the VOC treatment system in accordance with the eighth example when the crude oil is loaded into the oil storage tank, and (b) of FIG. 11 is a flowchart of the VOC in the VOC treatment system in accordance with the eighth example when the crude oil is transferred after the crude oil is loaded into the oil storage tank.

In the eighth example, a flow of the VOC in each of (a) and (b) of FIG. 11, i.e., a flow of the VOC when the crude oil is loaded into the oil storage tank or when the crude oil is transferred after the crude oil is loaded into the oil storage tank is the same as the above-described seventh example, and therefore, omitted descriptions will be derived from the foregoing example.

However, the evaporation gas heated or the liquefied gas evaporated by being heat-exchanged with the VOC compressed through the second heat exchanger 16b is supplied and consumed in the gas fuel liquefier 28, which is different from the above-described example.

Due to this difference, in the example, the evaporation gas heated or the liquefied gas evaporated by being heat-exchanged with the VOC compressed through the second heat exchanger 16b can be reliquefied through the gas fuel liquefier 28, so that waste of the evaporation gas or the liquefied gas can be prevented, thereby optimizing the use efficiency of the system.

FIG. 12 is a conceptual view of the VOC treatment system in accordance with the ninth example.

Referring to FIG. 12, in the VOC treatment system 1 in accordance with the ninth example, the flow of the VOC is differently changed since the arrangement of the first and second VOC discharge lines 13a and 13b is different from the above-described seventh example and the period in which the second heat exchanger 16b is driven is different from the above-described seventh example. Therefore, this will be mainly described.

It is noted that a third VOC discharge line 13c which is newly designated herein may be a line included in the first and second VOC discharge lines 13a and 13b in the above-described example, or a line newly designated to easily describe differences from the first and second VOC discharge lines 13a and 13b.

The first VOC discharge line 13a may have the first VOC compressor 11a and the first heat exchanger 16a to be connected to the second heat exchanger 16b.

The first VOC discharge line 13a may be connected to the VOC discharge line 13 connected from the oil storage tank OT, and be supplied with the VOC through the VOC discharge line 13 when the crude oil is loaded into the oil storage tank OT, so that a large amount of VOC flows.

The second VOC discharge line 13b may have the second VOC compressor 11b to be connected to the second heat exchanger 16b.

The second VOC discharge line 13b may be connected to the VOC discharge line 13 connected from the oil storage tank OT, and be supplied with the VOC through the VOC discharge line 13 when the crude oil is transferred after the crude oil is loaded into the oil storage tank OT, so that a small amount of VOC flows.

The third VOC discharge line 13c may connect the second heat exchanger 16b and the gas-liquid separator 17, and supply, to the gas-liquid separator 17, the VOC of which at least a portion is reliquefied by being heat-exchanged in the second heat exchanger 16b.

In an example, the second heat exchanger 16b may be operated both when the crude oil is loaded into the oil storage tank OT and when the crude oil is transferred after the crude oil is loaded into the oil storage tank OT.

As described above, in the ninth example, the second heat exchanger 16b can be additionally used to cool a large number of VOC when the crude oil is loaded into the oil storage tank OT, and thus a cooling medium can be sufficiently supplied. Accordingly, the reliability of reliquefaction can be improved, and the first heat exchanger 16a can be backed up.

Although it is difficult to completely back up the first heat exchanger 16a due to a limitation of treatment capacity, the first heat exchanger 16a can be sufficiently backed up during a maintenance and repair period of the first heat exchanger 16a.

Driving according to organic coupling of the components of the VOC treatment system 1 in accordance with the ninth example through the above-described first to third VOC discharge lines 13a, 13b, and 13c will be described below with reference to FIGS. (a) and (b) of FIG. 12.

(a) of FIG. 12 is a flowchart of the VOC in the VOC treatment system in accordance with the ninth example when the crude oil is loaded into the oil storage tank, and (b) of FIG. 12 is a flowchart of the VOC in the VOC treatment system in accordance with the ninth example when the crude oil is transferred after the crude oil is loaded into the oil storage tank.

The flow of a solid line in (a) of FIG. 12 will be described. A large amount of VOC is generated in the oil storage tank OT when the crude oil is loaded into the oil storage tank OT. The oil storage tank OT supplies the VOC to the first VOC discharge line 13a through the VOC discharge line 13.

The VOC supplied to the first VOC discharge line 13a is supplied to the first VOC compressor 11a to be compressed and then supplied to the first heat exchanger 16a to be supplied with cold heat from seawater, so that at least a portion of the VOC is reliquefied.

The VOC of which at least a portion is reliquefied may be additionally supplied to the second heat exchanger 16b to be additionally cooled. Accordingly, the VOC may be completely reliquefied.

The VOC reliquefied in the second heat exchanger 16b is supplied to the gas-liquid separator 17 through the third VOC discharge line 13c to be separated into a gas phase and a liquid phase. The VOC in the gas phase is supplied and consumed in the other source DE of demand, and the VOC in the liquid phase is supplied and stored in the VOC storage tank 15.

The seawater heat-exchanged with the VOC may be again discharged to the sea Sea.

As described above, the large amount of VOC generated when the crude oil is loaded into the oil storage tank OT can be treated in quantity through the first VOC compressor 11a and the first heat exchanger 16a, and thus the stability of the system can be improved. Further, the large amount of VOC can be additionally cooled through the second heat exchanger 16b. Thus, the reliquefaction performance of the VOC can be maximized, and the reliability of reliquefaction can be improved.

The flow of a solid line in (b) of FIG. 12 will be described. A small amount of VOC is generated in the oil storage tank OT when the crude oil is transferred after the crude oil is loaded into the oil storage tank OT. The oil storage tank OT supplies the VOC to the second VOC discharge line 13b through the VOC discharge line 13.

The VOC supplied to the second VOC discharge line 13b is supplied to the second VOC compressor 11b to be compressed, and then supplied to the second heat exchanger 16b to be supplied with cold heat from seawater, so that at least a portion of the VOC is reliquefied.

The VOC of which at least a portion is reliquefied is supplied to the gas-liquid separator 17 through the third VOC discharge line 13c to be separated into a gas phase and a liquid phase. The VOC in the gas phase is supplied and consumed in the other source DE of demand, and the VOC in the liquid phase is supplied and stored in the VOC storage tank 15.

As described above, the small amount of VOC generated when the crude oil is transferred after the crude oil is loaded into the oil storage tank OT can be treated through the second VOC compressor 11b and the second heat exchanger 16b, which have a small-amount treatment ability. Thus, the power consumption of the system can be optimized, and the waste of energy can be reduced.

The liquefied gas or evaporation gas, heat-exchanged with the VOC, may be supplied to the gas fuel treatment unit 20 to be treated and then be used as fuel of the main engine ME or the generator engine GE, or be mixed with the VOC supplied from the VOC storage tank 15 to be used as fuel of the main engine ME or the generator engine GE.

FIG. 13 is a conceptual view of the VOC treatment system in accordance with the tenth example.

Referring to FIG. 13, the VOC treatment system 1 in accordance with the tenth example may be provided with the gas fuel liquefier 28 in replacement of the gas fuel treatment unit 20, as compared with the above-described ninth example.

However, since such a difference is the same as that of the above-described eighth example from the above-described seventh example, the configuration and effect caused thereby in this example is sufficiently understandable through the eighth example, and therefore, descriptions of this example will be omitted.

FIG. 14 is a conceptual view of the VOC treatment system in accordance with the eleventh example.

Referring to FIG. 14, the VOC treatment system 1 in accordance with the eleventh example is different from the above-described ninth and tenth examples, in that a gas-liquid separator (first gas-liquid separator 17a) is additionally provided, and therefore, this will be mainly described.

The first VOC discharge line 13a may have the first VOC compressor 11a, the first heat exchanger 16a, and the first gas-liquid separator 17a, and be connected to the second heat exchanger 16b.

The first VOC discharge line 13a may be connected to the VOC discharge line 13 connected from the oil storage tank OT, and be supplied with the VOC through the VOC discharge line 13 when the crude oil is loaded into the oil storage tank OT, so that a large amount of VOC flows.

The first gas-liquid separator 17a may be provided on the first VOC discharge line 13a to temporarily store the VOC of which at least a portion is reliquefied. Also, the first gas-liquid separator 17a may separate the VOC of which at least a portion is reliquefied into a gas phase and a liquid phase. The VOC in the gas phase may be again supplied to the second heat exchanger 16b, and the VOC in the liquid phase may be supplied to the VOC storage tank 15.

The first gas-liquid separator 17a may be used when the crude oil is loaded into the oil storage tank OT, and temporarily store a large amount of VOC as described above, to serve as a flow buffer.

A second gas-liquid separator 17b is the same as the gas-liquid separator 17 described in the above-described example, and therefore, a detailed description will be omitted.

As described above, in the eleventh example, the first gas-liquid separator 17a is additionally provided to reliquefy a large amount of VOC when the crude oil is loaded into the oil storage tank OT. Thus, the first gas-liquid separator 17a can serve as a flow buffer required to treat a large amount of VOC, so that the reliability of treatment of the VOC can be improved.

Driving according to organic coupling of the components of the VOC treatment system 1 in accordance with the eleventh example through the above-described configuration will be described below with reference to FIGS. (a) and (b) of FIG. 14.

(a) of FIG. 14 is a flowchart of the VOC in the VOC treatment system in accordance with the eleventh example when the crude oil is loaded into the oil storage tank, and (b) of FIG. 14 is a flowchart of the VOC in the VOC treatment system in accordance with the eleventh example when the crude oil is transferred after the crude oil is loaded into the oil storage tank.

The flow of a solid line in (a) of FIG. 14 will be described. A large amount of VOC is generated in the oil storage tank OT when the crude oil is loaded into the oil storage tank OT. The oil storage tank OT supplies the VOC to the first VOC discharge line 13a through the VOC discharge line 13.

The VOC supplied to the first VOC discharge line 13a is supplied to the first VOC compressor 11a to be compressed and then supplied to the first heat exchanger 16a to be supplied with cold heat from seawater, so that at least a portion of the VOC is reliquefied.

The VOC of which at least a portion is reliquefied may be supplied to the first gas-liquid separator 17a to be temporarily stored. The VOC of which at least a portion is reliquefied may be separated into a gas phase and a liquid phase.

The VOC in the liquid phase, which is separated from the first gas-liquid separator 17a, may be supplied to the VOC storage tank 15, and the VOC in the gas phase, which is separated from the first gas-liquid separator 17a, may be supplied to the second heat exchanger 16b to be additionally cooled and then reliquefied.

The VOC reliquefied in the second heat exchanger 16b is supplied to the second gas-liquid separator 17b through the third VOC discharge line 13c to be again separated into a gas phase and a liquid phase. The VOC in the gas phase is supplied and consumed in the other source DE of demand, and the VOC in the liquid phase is supplied and stored in the VOC storage tank 15.

The seawater heat-exchanged with the VOC may be again discharged to the sea Sea. The liquefied gas or evaporation gas, heat-exchanged with the VOC, may be supplied to the gas fuel treatment unit 20 to be used as fuel of the main engine ME or the generator engine GE.

As described above, the large amount of VOC generated when the crude oil is loaded into the oil storage tank OT can be treated in quantity through the first VOC compressor 11a and the first heat exchanger 16a, and simultaneously, a certain amount of VOC can be temporarily stored through the first gas-liquid separator 17a, so that an overload of each driving unit can be prevented. Further, the stability of the system can be improved. Additionally, the VOC can be cooled through the second heat exchanger 16b. Thus, the reliquefaction performance of the VOC can be maximized, and the reliability of reliquefaction can be improved.

The flow of a solid line in (b) of FIG. 14 will be described. A small amount of VOC is generated in the oil storage tank OT when the crude oil is transferred after the crude oil is loaded into the oil storage tank OT. The oil storage tank OT supplies the VOC to the second VOC discharge line 13b through the VOC discharge line 13.

The VOC supplied to the second VOC discharge line 13b is supplied to the second VOC compressor 11b to be compressed, and then supplied to the second heat exchanger 16b to be supplied with cold heat from seawater, so that at least a portion of the VOC is reliquefied.

The VOC of which at least a portion is reliquefied is supplied to the second gas-liquid separator 17b through the third VOC discharge line 13c to be separated into a gas phase and a liquid phase. The VOC in the gas phase is supplied and consumed in the other source DE of demand, and the VOC in the liquid phase is supplied and stored in the VOC storage tank 15.

As described above, the small amount of VOC generated when the crude oil is transferred after the crude oil is loaded into the oil storage tank OT can be treated through only the second VOC compressor 11b and the second heat exchanger 16b, which have a small-amount treatment ability. Thus, the power consumption of the system can be optimized, and the waste of energy can be reduced.

The liquefied gas or evaporation gas, heat-exchanged with the VOC, may be supplied to the gas fuel treatment unit 20 to be treated and then be used as fuel of the main engine ME or the generator engine GE, or be mixed with the VOC supplied from the VOC storage tank 15 to be used as fuel of the main engine ME or the generator engine GE.

As described above, in the VOC treatment system 1 and the ship S in accordance with the present disclosure, the configuration for treating the VOC according to a period in which the VOC is generated is changed, so that the treatment efficient of the VOC and the consumption efficiency of energy can be maximized.

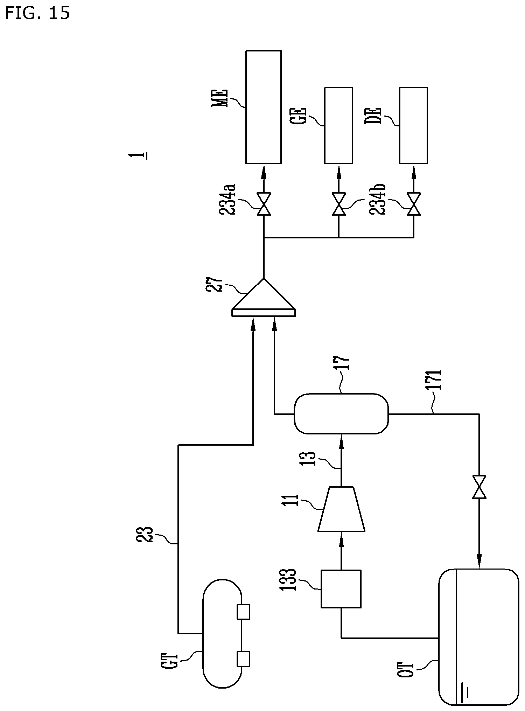

FIG. 15 is a conceptual view of a VOC treatment system in accordance with a twelfth example.

Referring to FIG. 15, the VOC treatment system 1 in accordance with the twelfth example includes an oil storage tank OT, a gas fuel tank GT, a VOC treatment unit 10, and a gas fuel treatment unit 20. Hereinafter, in this example, portions different from those of the above-described example will be mainly described.

The VOC treatment unit 10 treats VOC generated in the oil storage tank in which oil such as crude oil is stored and supply the treated VOC to the main engine ME or the generator engine GE. To this end, the VOC treatment unit 10 includes a VOC compressor 11, a gas-liquid separator 17, and the like.

The VOC compressor 11 compresses the VOC. The VOC compressor 11 may compress the VOC to be suitable for a pressure required in the engine ME, GE, and DE, etc. The pressure of the VOC output from the VOC compressor 11 may be 10 bar to 600 bar according to kinds of the engine ME, GE, and DE.

The VOC compressor 11 may be a variable compressor, and a compression ratio may vary according to a load of the engine ME, GE, and DE. That is, the load of the engine ME, GE, and DE may be differently determined according to a speed at which the ship S is to speed up, and therefore, the VOC compressor 11 may regulate the pressure of the VOC by considering a required speed.

Alternatively, in an example, when the main engine ME is an XDF, a required pressure of the main engine ME may be about 18 bar, a required pressure of the generator engine GE may be 10 bar, and a required pressure of a boiler or the like as the other source DE of demand. Therefore, the VOC compressor 11 may regulate the pressure of the VOC, corresponding to the required pressure of the engine ME, GE, and DE, etc.

Unlike the drawing, in the case of a system in which a mixer 27 is respectively provided at an upstream of the main engine ME and an upstream of the generator engine GE such that the main engine ME, the generator engine GE, and the like are basically operated with gas fuel, and the supply of a mixture of the VOC to each engine ME, GE or DE is on/off, the compression ratio of the VOC compressor 11 may be changed according to whether the engine ME, GE, and DE to which the VOC is transferred is the main engine ME or the generator engine GE.

Unlike as described above, the VOC compressor 11 may be a fixed compressor. The VOC compressor 11 may compress the VOC at a pressure (e.g., 7 to 10 bar) lower than the required pressure (e.g., 18 bar) of the main engine ME.

Referring to a real sailing example, since the main engine ME was not operated with a maximum load, fuel was compressed and consumed at a pressure which did not reach a maximum required pressure. Nevertheless, there was no problem in satisfying Maximum Continuous Rating (MCR).

Therefore, in the present disclosure, based on data of the real sailing example, the VOC is compressed and supplied to be suitable for the required pressure of the generator engine GE, which is lower than that of the main engine ME, so that sailing is not interrupted while saving power.

The gas-liquid separator 17 separates the VOC into a gas phase and a liquid phase. Although the VOC is generally volatilized in the oil storage tank OT to be discharged in the gas phase, VOC in the liquid phase may be mixed with the VOC in the gas phase since a phase change occurs due to an increase in pressure as the VOC is compressed in the VOC compressor 11. Therefore, the gas-liquid separator 17 filters the VOC in the liquid phase, which is included in the VOC, and supplies only the VOC in the gas phase to the engine ME, GE, and DE, etc., so that the efficiency of the engine ME, GE, and DE can be ensured.

For reference, liquid may be mixed with the VOC at an upstream of the VOC compressor 11. However, a knock-out drum may be disposed at a front end of the VOC compressor 11 such that the VOC in the liquid phase is separated from the VOC. Thus, only the VOC in the gas phase can be introduced to the VOC compressor 11.

However, when oil is loaded into the oil storage tank OT, the ship S is not propelled, and hence the main engine ME for propulsion is not operated. Therefore, the VOC in the gas phase, which is separated from the gas-liquid separator 17, may return to the oil storage tank OT, etc., like the VOC in the liquid phase, which will be described later.

A VOC discharge line 13 may be connected from the oil storage tank OT to the gas-liquid separator 17. The VOC discharge line 13 may permit and control the flow of the VOC, based on the internal pressure of the oil storage tank OT, etc.

A VOC return line 171 may be provided in the gas-liquid separator 17. The VOC return line 171 may return the VOC in the liquid phase, which is separated from the gas-liquid separator 17, to the oil storage tank OT. The VOC compressor 11 may compress the VOC at, for example, 10 bar. The VOC in the liquid phase (LVOC) may be generated to become about 6% in the gas-liquid separator 17.

The VOC return line 17 may extend to an upper end and/or a lower end at the inside of the oil storage tank OT. The pressure of VOC compressed by the VOC compressor 11 is lowered while the VOC is introduced to an internal space of the oil storage tank OT, so that the VOC can be cooled by the Joule-Thomson effect.

Thus, the internal temperature of the oil storage tank OT may be slightly lowered due to return of the LVOC, and accordingly, generation of the VOC can be suppressed. However, it is necessary for the oil storage tank OT to prevent viscosity from being increased. When considering a route temperature (30 °C or more in the case of an equator route) of the ship S storing oil, an amount (a maximum of 98%) of oil filled in the oil storage tank OT, etc., separate heating is not required in spite of the return of the LVOC.

A CO2 adsorber 133 may be provided at the upstream of the VOC compressor 11 on the VOC discharge line 13. The CO2 adsorber 133 removes CO2 from the VOC and transfer the VOC having the CO2 removed therefrom to the mixer 27 which will be described later. That is, the VOC compressor 11 may compress the VOC from which the CO2 is removed by the CO2 adsorber 133.

The VOC is a component volatilized from oil such as crude oil, and the main component of the VOC is heavy carbon (heavier hydrocarbon) such as propane or butane as described above. However, in the present disclosure, the VOC is supplied together with gas fuel such as LNG to the engine ME, GE, and DE. Since the efficiency of the engine ME, GE, and DE driven with gas fuel is regulated by a methane number, the operation efficiency of the engine ME, GE, and DE may be deteriorated when a large amount of VOC having a low methane number is introduced.

In addition, the VOC is heat-exchanged and/or mixed with gas fuel to be supplied to the engine ME, GE, and DE. In this case, low-temperature corrosion may occur due to CO2 included in the VOC.

Thus, in the present disclosure, CO2 is adsorbed and removed from the VOC before compression, so that the methane number of the VOC mixed with the gas fuel can be slightly increased. Further, the low-temperature corrosion in the heat exchanger 16 or the mixer 27 can be solved.

The CO2 adsorber 133 can remove CO2 from the VOC by using various methods currently known in the art, and therefore, a detailed configuration of the CO2 adsorber 133 is not particularly limited. Also, it will be apparent that the CO2 adsorber 133 may be a component for removing CO2 by using a method except adsorption in spite of its terminological expression.

The gas fuel treatment unit 20 supplies gas fuel such as LNG to the engine ME, GE, and DE. In the present disclosure, the VOC may be mixed with the gas fuel to be supplied to the engine ME, GE, and DE. To this end, the gas fuel treatment unit 20 includes the mixer 27.

The mixer 27 may mix the VOC with the gas fuel, and supply the mixture to the engine ME, GE, and DE mounted in the ship S. The VOC transferred to the mixer 27 may be the VOC in the gas phase (SVOC), which is separated in the above-described gas-liquid separator 17.

The VOC in the gas phase, which is introduced to the mixer 27, is compressed by the VOC compressor 11 and then separated into a gas phase and a liquid phase. After the VOC is mixed with the gas fuel, the state of the VOC may be regulated to have a temperature and a pressure, which are suitable for the engine ME, GE, and DE, if necessary. Then the VOC may be supplied to the engine ME, GE, and DE, etc.

To this end, the gas fuel treatment unit 20 may include a gas fuel pump 21, a gas fuel evaporator 22, or the like. The above components may be properly disposed at an upstream and/or a downstream of the mixer 27.

The gas fuel treatment unit 20 may include a gas fuel supply line 23 connected to the mixer 27 in the gas fuel storage tank GT. In the present disclosure, when considering that the engine ME, GE, and DE is of a type in which the engine ME, GE, and DE is basically operated with gas fuel, a line from the mixer 27 to the engine ME, GE, and DE may be designated as the gas fuel supply line 23.

A line connected from the gas fuel storage tank GT to the mixer 27 may include an evaporation gas supply line 26 through which evaporation gas as gas fuel in a gas phase flows together with the gas fuel supply line 23 through which gas fuel in a liquid phase flows or in replacement of the gas fuel supply line 23.

By considering that methane numbers of the gas fuel in the liquid phase and the gas fuel in the gas phase are different from each other, the mixture ratio of the liquid phase and the gas phase in the gas fuel in addition to the mixture ratio of the VOC may also be regulated according to a load of the engine ME, GE, and DE. Thus, the methane number of fuel introduced to the engine ME, GE, and DE can be appropriately maintained.

As described above, in this example, the SVOC after the VOC is compressed is mixed with the gas fuel to be supplied to the engine ME, GE, and DE, and the LVOC is returned to the oil storage tank OT. Thus, discharge of the VOC in the air can be suppressed, and the amount of the gas fuel used can be reduced.

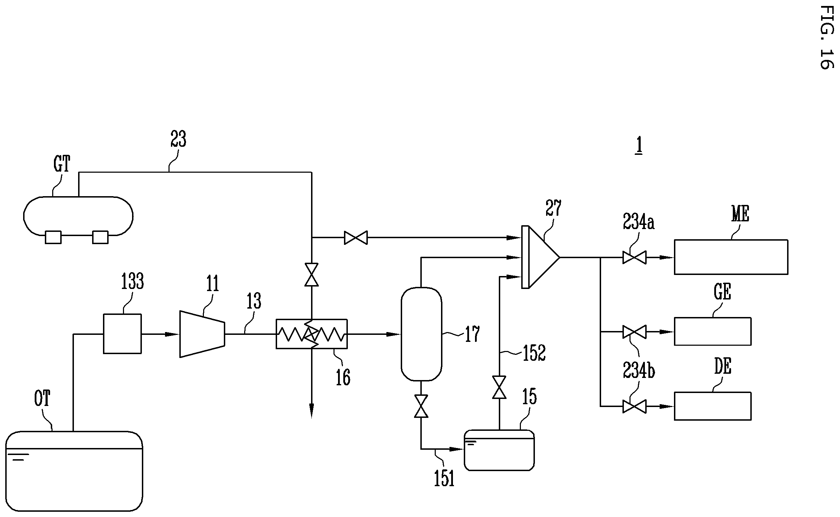

FIG. 16 is a conceptual view of a VOC treatment system in accordance with a thirteenth example.

Referring to FIG. 16, in the VOC treatment system 1 in accordance with a thirteenth example, a configuration of the VOC treatment unit 10 may be different from the above-described twelfth example.

In this example, the VOC treatment unit 10 further included a heat exchanger 16 and a VOC storage tank 15. The heat exchanger 16 cools a VOC generated in the oil storage tank OT. A refrigerant used for the heat exchanger 16 to cool the VOC may be gas fuel, a heat medium (glycol water, seawater, clear water, etc.) used to evaporate the gas fuel, and/or clear water for cooling, which is used in the ship S, but the present disclosure is not particularly limited. However, hereinafter, in this example, a case where the heat exchanger 16 cools the VOC as the gas fuel will be limitedly described for convenience.

The heat exchanger 16 cools the VOC generated in the oil storage tank OT by heat-exchanging the VOC with the gas fuel. To this end, the gas fuel supply line 23 may branch off from the gas fuel storage tank GT to be respectively connected to the heat exchanger 16 and the mixer 27.

Alternatively, unlike the drawing, gas fuel in a liquid phase, which is discharged from the gas fuel storage tank GT, may be transferred to the mixer 27 through the gas fuel supply line 23 to be mixed with the VOC, and then supplied to the engine ME, GE, and DE. Gas fuel in a gas phase, which is evaporated in the gas fuel storage tank GT, may be transferred to the heat exchanger 16 through the evaporation gas supply line 26 to be heat-exchanged with the VOC, and then burned by a gas combustion unit (GCU) (not shown), etc.

That is, the gas fuel supply line 23 may be connected from the gas fuel storage tank GT to the mixer 27, and the evaporation gas supply line 26 may be connected from the gas fuel storage tank GT to the heat exchanger 16.

The heat exchanger 16 may be provided at a downstream of the VOC compressor 11 to cool, as the gas fuel, the VOC compressed at about 10 bar, and the temperature of the cooled VOC may be about - 20 °C. It will be apparent that the temperature and pressure numerical values of the VOC are not limited to the above.

The gas-liquid separator 1 may be provided at a downstream of the heat exchanger 16 to separate the cooled VOC into a gas phase and a liquid phase. After the boiling point of the VOC is increased by compression, the VOC is cooled and then transferred to the gas-liquid separator 17. Therefore, in this example, the liquefaction rate of the VOC can be increased. The gas-liquid separator 17 may return LVOC to the oil storage tank OT and/or transfer the LVOC to the VOC storage tank 15.

The VOC storage tank 15 stores LVOC as the VOC in the liquid phase, which is cooled in the heat exchanger 16 and then separated in the gas-liquid separator 17. It will be apparent that, in loading of oil, the VOC storage tank 16 may also store SVOC as the VOC in the gas phase, which is separated in the gas-liquid separator 17.

The oil storage tank OT may accommodate other crude oil components in addition to the VOC to be volatilized, but the VOC storage tank 15 stores only a heavier hydrocarbon component volatilized in the oil. Hence, when the VOC is mixed with the gas fuel by using the VOC storage tank 15, the supply to the engine ME, GE, and DE can be more easily controlled.

A VOC storage line 151 may be connected from the gas-liquid separator 17 to the VOC storage tank 15, and a VOC supply line 152 may be connected from the VOC storage tank 15 to the mixer 27. The VOC storage tank 15 may store the VOC in the liquid phase, and the VOC in the liquid phase may be naturally evaporated due to a factor such as heat penetration from the outside.

The VOC evaporated in the VOC storage tank 15 may flow through the VOC supply line 152. The VOC in the liquid phase may remain in the VOC storage tank 15 and then returned to the oil storage tank OT or evaporated through a separate heating source to be transferred to the mixer 27, if necessary.

The VOC storage tank 15 may store the VOC in the liquid phase, which is overcooled in the heat exchanger 16 and then separated in the gas-liquid separator 17. Additional evaporation in the VOC storage tank 15 is suppressed, so that an increase in internal pressure of the VOC storage tank 15 can be minimized.

In this example, the gas fuel is transferred to the mixer 17 or is supplied to the heat exchanger 16. When the amount of the gas fuel supplied to the heat exchanger 16 is decreased, the cooling of the VOC is insufficiently made, and therefore, the amount of the SVOC supplied to the mixer 27 from the gas-liquid separator 17 or the VOC storage tank 15 may be increased.

On the contrary, when the amount of the gas fuel supplied to the heat exchanger 16 is increased, the cooling of the VOC is sufficiently made, and therefore, the amount of the SVOC supplied to the mixer 27 may be decreased.

That is, in this example, the amount of the gas fuel supplied to the heat exchanger 16 may be used to determine an amount of the VOC introduced to the mixer 27. Hence, the flow of the gas fuel toward the heat exchanger 16 may be controlled according to an amount of the VOC generated in the oils storage tank OT, a load of the VOC compressor 11, a level and an internal pressure of the VOC storage tank 15, etc.

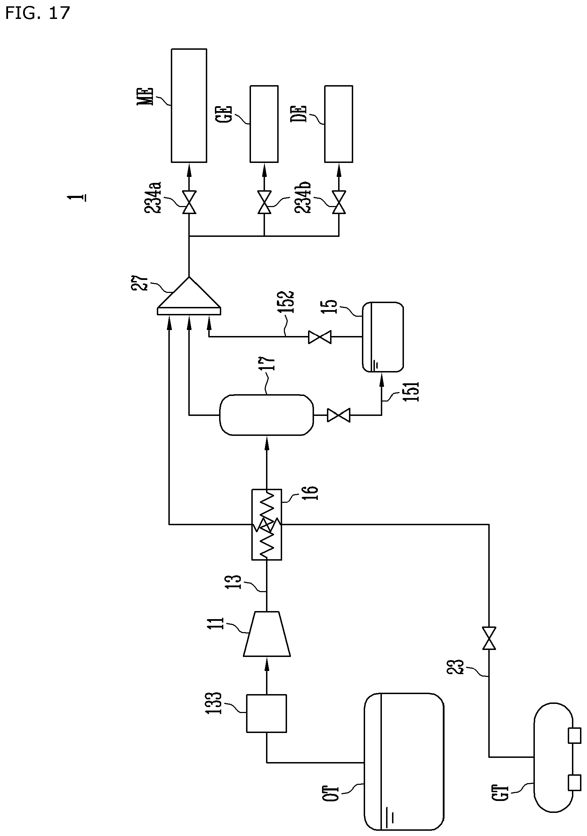

FIG. 17 is a conceptual view of a VOC treatment system in accordance with a fourteenth example.

Referring to FIG. 17, unlike the above-described thirteenth example, in this example, the gas fuel heated by the VOC in the heat exchanger 16 may be transferred to the mixer 27. To this end, the gas fuel supply line 23 is connected to the mixer 27 via the heat exchanger 16.

The heat exchanger 16 may cool the VOC by using the gas fuel in a liquid phase. In particular, the heat exchanger 16 may overcool the VOC by using the gas fuel and transfer the overcooled VOC to the VOC storage tank 15 which will be described later. The heat exchanger 16 may overcool the VOC to about -40 °C.

When the VOC is overcooled, hydrate may be generated due to CO2 included in the VOC. However, this may be solved as the CO2 in the VOC is removed by the above-described CO2 adsorber 133.

In this example, the gas fuel in the liquid phase may be used to perform cooling (overcooling) of the heat exchanger 16, and the gas fuel in a gas phase, which is evaporated in the gas fuel storage tank GT, may be supplied to the other source DE of demand such as an auxiliary boiler or IGG through the evaporation gas supply line 26.

That is, the gas fuel in the gas phase, of which temperature is slightly higher than that of the gas fuel in the liquid phase, is not heat-exchanged with the VOC but may be consumed, and the VOC may cool only the gas fuel in the liquid phase.

As described above, in this example, the low-temperature gas fuel discharged from the gas fuel storage tank GT can be heated through the VOC, and thus energy used in evaporation of the gas fuel can be reduced.

Also, in this example, the VOC is stored as the LVOC while being cooled (overcooled). Thus, a methane number is set by effectively regulating a mixture flow rate of the VOC, so that the operation efficiency of the engine ME, GE, and DE can be ensured.

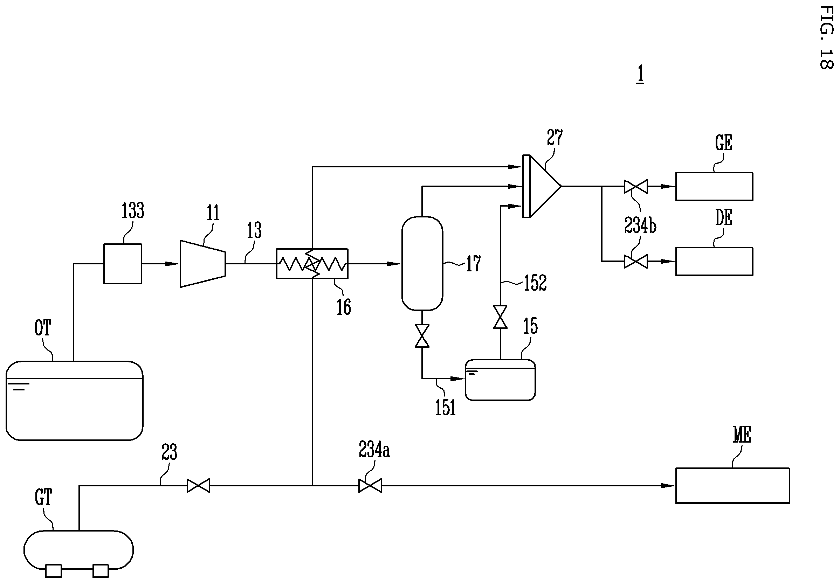

FIG. 18 is a conceptual view of a VOC treatment system in accordance with a fifteenth example.

Referring to FIG. 18, in the VOC treatment system 1 in accordance with the fifteenth example, the engine ME, GE, and DE to which the VOC is supplied may be restricted. As shown in the drawing, the engine ME, GE, and DE supplied with the VOC and the gas fuel from the mixer 27 may be the generator engine GE, etc., and the main engine ME provided to propel the ship S may be supplied with the gas fuel without mixture of the VOC.

When the main engine ME is XDF, a required methane number of the main engine ME may be 60 MN or more. However, the methane number of the VOC is 20 MN or so. Therefore, when the VOC is mixed with the gas fuel, the methane number of fuel introduced to the main engine ME is not sufficient, which may be problematic.

In the above-described example, the methane number may be regulated through, the CO2 adsorber 133, the supply of the evaporation gas as the gas fuel in the gas phase, which has a high methane number, etc. However, when considering that the amount of the VOC supplied is not uniform, the methane number of the fuel introduced to the main engine ME may be changed.

Therefore, in this example, the main engine ME is operated with only the gas fuel without mixture of the VOC so as to prevent the output of the main engine ME from being fluctuated since the mixture amount of the VOC is changed due to a variable such as an amount of oil stored in the oil storage tank OT or a sailing temperature.

To this end, the gas fuel supply line 23 and/or the evaporation gas supply line 26 may branch off at an upstream of the mixer 27 to be respectively connected to the main engine ME and the generator engine GE. That is, the main engine ME is not provided at a downstream of the mixer 27, but the generator engine GE, the other source DE of demand, and the like may be disposed at the downstream of the mixer 27.

As described above, in this example, the VOC is not mixed with the gas fuel transferred to the main engine ME but supplied to only the generator engine GE and/or the other source DE of demand, so that the fluctuation of the output of the main engine ME can be suppressed, thereby ensuring the sailing stability of the ship S.

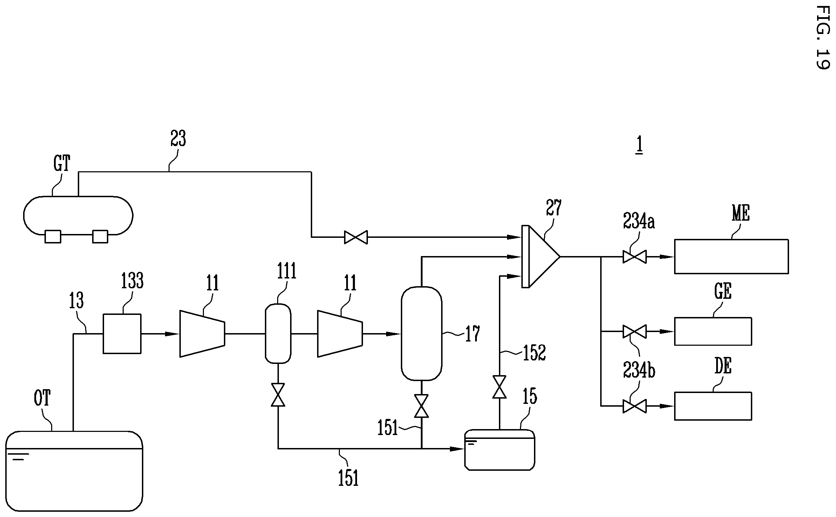

FIG. 19 is a conceptual view of a VOC treatment system in accordance with a sixteenth example.

Referring to FIG. 19, in the VOC treatment system 1 in accordance with the sixteenth example, the VOC compressor 11 may be provided in multiple stages, and an intercooler 111 may be placed between the VOC compressors 11 provided in the multiple stages.

A plurality of VOC compressors 11 may be provided to compress the VOC in multiple stages, and a pressure of the VOC introduced to the gas-liquid separator 17 may be higher than that in the above-described example. Thus, in this example, a larger amount of LVOC can be generated by increasing the boiling point of the VOC through additional compression of the VOC.

The intercooler 11 is provided between the plurality of VOC compressors 11 to cool the VOC. A refrigerant used for the intercooler 11 to cool the VOC is not limited, and the gas fuel may be used as the refrigerant in the intercooler 111 as described in the heat exchanger 16 of the above-described example.

The gas fuel supply line 23 and/or the evaporation gas supply line 26 may be provided via the intercooler 111 from the gas fuel storage tank GT, and then connected to the mixer 27.

The intercooler 111 may cool the VOC primarily compressed by the VOC compressor 11 through the gas fuel, etc., and return at least a portion of the cooled VOC to the VOC storage tank 15. The VOC returned to the VOC storage tank 15 may be LVOC, and the intercooler 111 may have a structure capable of performing functions of a cooler and a gas-liquid separator.

A VOC storage line 151 may be connected from the intercooler 111 to the VOC storage tank 15. The intercooler 111 may cool the VOC by heat-exchanging the gas fuel, etc. through the VOC, and return the VOC in a liquid phase in the cooled VOC to the VOC storage tank 15.

As described in the above-described heat exchanger 16, the intercooler 11 returns the VOC in an overcooling state to the VOC storage tank 15 by overcooling the VOC through the gas fuel, so that the generation of SOVC can be suppressed.

Also, the intercooler 111 may return the LVOC, etc. as at least a portion of the cooled VOC to the oil storage tank OT in addition to the VOC storage tank 15. To this end, a VOC return line 171 may be connected from the intercooler 111 to the oil storage tank OT.

As described above, in this example, the VOC compressor 11 is provided in multiple stages, so that the return rate of the LVOC in the gas-liquid separator 17 can be further increased. Further, the LVOC can be returned from the intercooler 111 provided between the VOC compressors 11, and thus the return efficiency of the VOC can be sufficiently improved even when a component for liquefying the VOC is not separately provided.

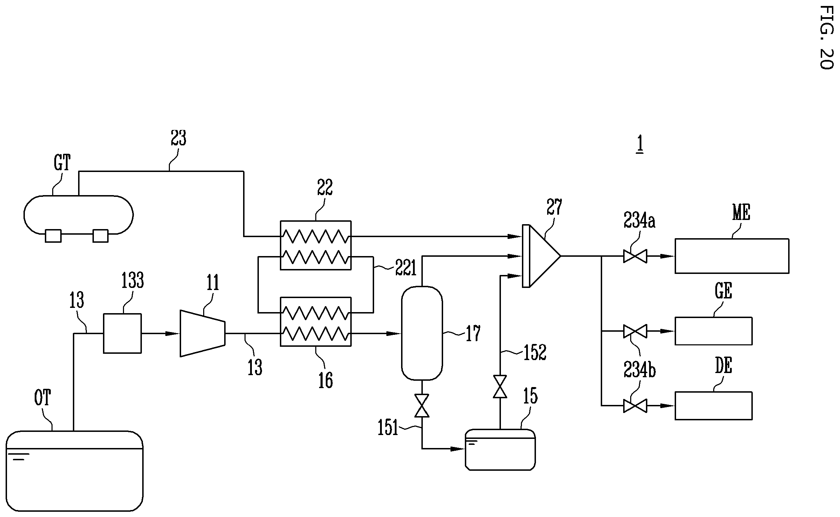

FIG. 20 is a conceptual view of a VOC treatment system in accordance with a seventeenth example.

Referring to FIG. 20, in the VOC treatment system 1 in accordance with the seventeenth example, the gas fuel treatment unit 20 may be provided with a gas fuel evaporator 22, and a heat exchanger 16 and the gas fuel evaporator 22 may be indirectly connected to each other.

The gas fuel evaporator 22 is provided on the gas fuel supply line 23 connected from the gas fuel storage tank GT to the mixer 27, and heats gas fuel through a heat medium. The gas fuel evaporator 22 may heat the gas fuel in a liquid phase (or gas phase), which is discharged from the gas fuel storage tank GT) by using various kinds of heat media which are not limited. In an example, the heat medium may be seawater, steam, glycol water, etc.

To this end, a heat medium supply unit 221 for supplying the heat medium may be provided in the gas fuel evaporator 22. The heat medium supply unit 221 may include components such as a line (not indicated by a reference numeral) for circulating the heat medium, a heat medium pump (not shown) for pumping the heat medium, and a heat medium heater (not shown).

The heat exchanger 16 for cooling the VOC compressed by the VOC compressor 11 may use the heat medium of the gas fuel evaporator 22. That is, a heat medium circulation line has one side connected to the gas fuel evaporator 22 and the other side connected to the heat exchanger 16.

The heat medium may be cooled while the gas fuel is being heated in the gas fuel evaporator 22, and then introduced to the heat exchanger 16, to cool the VOC. Thus, in this example, the heat medium cooled by the gas fuel can be heated by heat-exchange with the VOC, and accordingly, the heat medium heater can be omitted or minimized.

It will be apparent that the heat medium supply unit 221 may appropriately regulate a load of the heat medium heater and/or a flow rate of the heat medium which is introduced to the heat medium heater on the heat medium circulation line or detours the heat medium heater according to a flow rate of the heat medium supplied to the heat exchanger 16.

As described above, in this example, the heat medium used for evaporation of the gas fuel is utilized when the VOC is cooled, so that energy saving can be implemented.

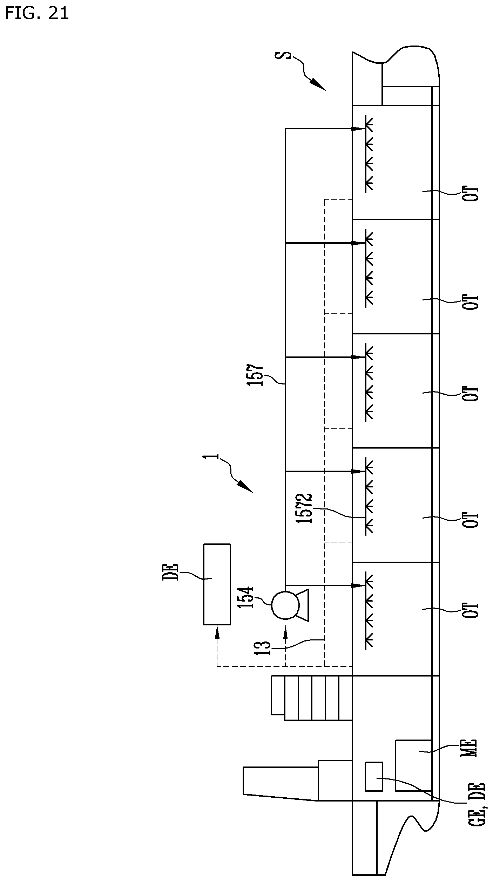

FIG. 21 is a conceptual view of a ship including a VOC treatment system in accordance with an eighteenth example.

Referring to FIG. 21, in the VOC treatment system 1 in accordance with the eighteenth example, a VOC treatment unit 10 includes a VOC pump 154 and a VOC injector 1572.

The VOC pump 154 compresses a VOC generated in the oil storage tank OT. A VOC discharge line 13 may be connected from the oil storage tank OT to the VOC pump 154, and the VOC pump 154 compresses the VOC in a gas phase or liquid phase, which is discharged along the VOC discharge line 13, at an appropriate pressure.

Alternatively, in this example, a VOC compressor 11 may be used in replacement of the VOC pump 154. That is, the VOC may be volatilized in the gas phase in the oil storage tank OT to be discharged through the VOC discharge line 13, and therefore, all components capable of increasing the pressure of the VOC may be provided in the VOC discharge line 13 by considering a state of the VOC.

That is, the VOC pump 154 and the VOC compressor may be provided together. In an example, a gas-liquid separator 17 may be disposed in the VOC discharge line 13, and the VOC pump 154 and the VOC compressor 11 may be provided in parallel at a downstream of the gas-liquid separator 17. Therefore, LVOC separated in the gas-liquid separator 17 may be transferred to the VOC pump 154, and SVOC separated in the gas-liquid separator 17 may be transferred to the VOC compressor 11. For reference, the VOC pump 154 described herein may be replaced with the VOC compressor 11 or be replaced with a set of the VOC pump 154 and the VOC compressor 11.

The VOC injector 1572 returns the pressurized/compressed VOC into the oil storage tank OT. The pressure of the pressurized VOC may be 2 to 10 bar (e.g., about 3 bar), and the VOC injector 1572 returns the pressurized VOC into the oil storage tank OT, to implement decompression of the VOC.

In particular, the VOC injector 1572 may inject the VOC in an injection form into the oil storage tank OT, so that the injected VOC is cooled by decompression to lower the temperature of oil in the oil storage tank OT.

That is, the VOC injector 1572 is a spray for spraying the VOC pressurized by the VOC pump 154, etc. into the oil storage tank OT. The injected VOC may be cooled by the Joule-Thomson effect while the VOC is decompressed as the pressure of the VOC converges on the internal pressure of the oil storage tank OT. Thus, an amount of the VOC generated in the oil storage tank OT can be suppressed by the VOC which is returned and simultaneously cooled.

A VOC return line 157 may be connected from the VOC pump 154, etc. to the VOC injector 1572, and a VOC return valve 1571 may be provided on the VOC return line 157. The opening of the VOC return valve 1571 may be regulated according to a temperature and/or a pressure of the oil stored in the oil storage tank OT.

In an example, when it is determined that it is necessary to suppress the amount of the VOC generated in the oil storage tank OT, the VOC return valve 1571 may be sufficiently opened such that the VOC is pressurized via the VOC pump 154 and then injected into the oil storage tank OT by the VOC injector 1572.

The above-described VOC discharge line 13 may branch off at an upstream of the VOC pump 154 to be connected to a source of demand, which is mounted in the ship S. The source of demand may be a boiler, IGG, etc., and the VOC discharge line 13 may transfer the VOC generated in the oil storage tank OT to the boiler, etc. without pressurization.

To this end, the oil storage tank OT may increase the internal pressure thereof up to a required pressure of the boiler by accumulating the VOC generated therein. That is, the VOC return valve 1571 may maintain in a state in which the VOC return valve 1571 is not opened until the internal pressure of the oil storage tank OT reaches the required pressure of the boiler, etc.

In an example, the oil storage tank OT may increase the internal pressure to 2 bar to 3 bar or more by accumulating the VOC generated therein. It will be apparent that the internal pressure of the oil storage tank OT in which the VOC is accumulated may be changed according to the required pressure of the boiler, etc.

As described above, in this example, the VOC generated in the oil storage tank OT is pressurized and then injected into the oil storage tank OT, so that the generation of the VOC in the oil storage tank OT can be suppressed.

In this example, the VOC is supplied and consumed in the boiler, etc. through free flow without compression by increasing the pressure of the oil storage tank OT up to about 3 bar, so that a configuration for treating the VOC can be simplified.

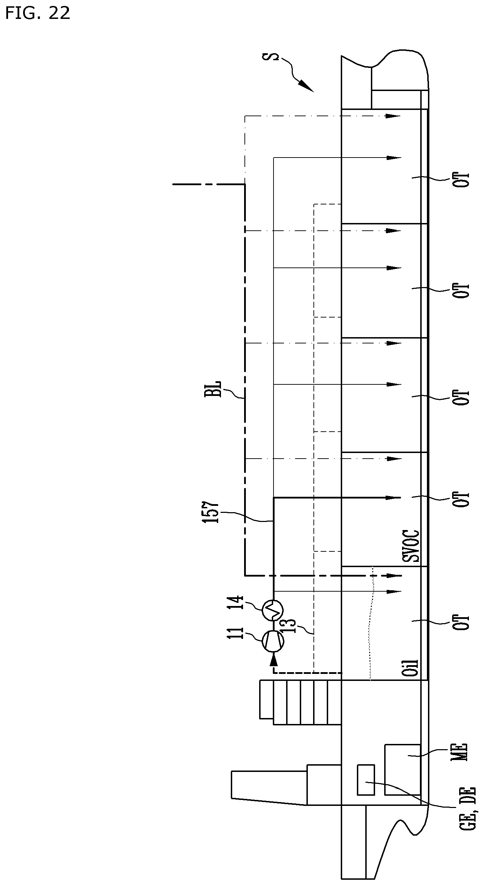

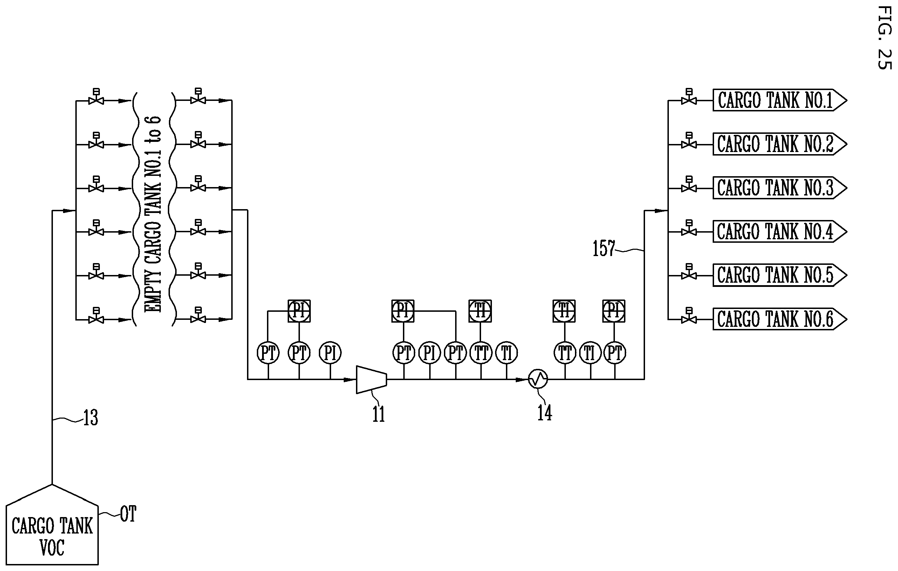

FIGS. 22 to 24 are conceptual views of a ship including a VOC treatment system in accordance with an embodiment of the present invention. FIG. 25 is a conceptual view of the VOC treatment system in accordance with the embodiment of the present invention.

In FIGS. 22 to 24, a dotted line means a VOC discharge line 13, a solid line means a VOC return line 157, and an alternated long and short dash line means a bunkering line BL. A portion indicated by a thick line means a portion at which a flow rate exists.

In the VOC treatment system 1 in accordance with this embodiment, bunkering through the bunkering line BL and VOC returning are simultaneously performed on a plurality of oil storage tanks OT, so that VOC discharge can be completely blocked. In addition, it is unnecessary to separately provide an apparatus for VOC removal. Hereinafter, this will be described in detail.

In this embodiment, the VOC compressor 11 (it will be apparent that the VOC compressor 11 may be replaced with the VOC pump 154) pressurizes a VOC generated when oil is loaded into the oil storage tank OT. In the above-described embodiment, the VOC compressor 11 compresses the VOC generated from the oil storage tank OT into which the oil has already been loaded. On the other hand, in this embodiment, VOC compression may be performed simultaneously with bunkering.

Specifically, as shown in FIG. 22, the VOC compressor 11 compresses a VOC generated in a first oil storage tank OT under loading and transfers the compressed VOC to a second oil storage tank OT before loading. Hereinafter, the terms "first" and "second" are given according to a bunkering order, but the present invention is not limited thereto. In addition, the second oil storage tank OT may mean a third or more oil storage tank instead of the second oil storage tank.

In a conventional case, a large amount of VOC generated in bunkering was burned away or unnecessarily consumed. However, in this embodiment, the VOC is returned, so that combustion of the VOC, or the like is unnecessary.

In this embodiment, the VOC generated in the oil storage tank OT under loading is transferred to the oil storage tank OT empty before loading. Since the VOC is compressed by the VOC compressor 11 and then transferred to the oil storage tank OT which is in an empty state, the VOC is supplied at a pressure higher than the internal pressure of the oil storage tank OT. However, since the oil storage tank OT to which the VOC is introduced is empty, the VOC may be decompressed due to volume expansion even when the VOC having a high pressure is introduced, which is not problematic.

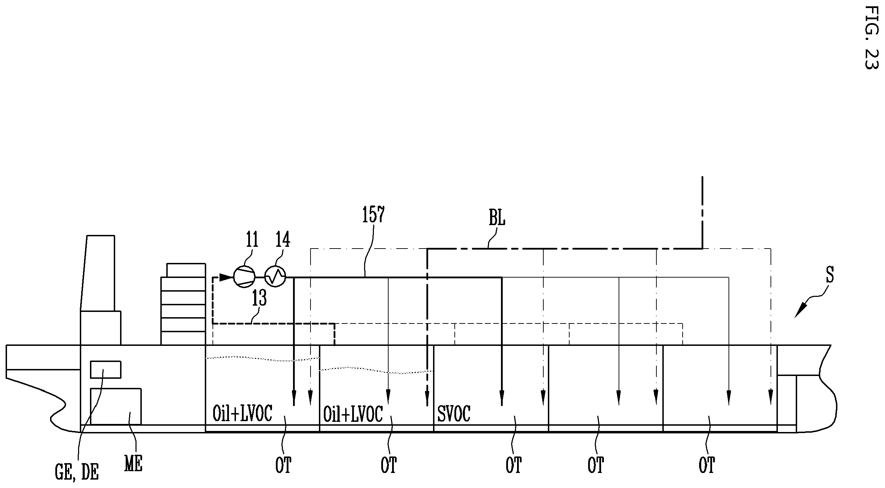

As shown in FIG. 23, the VOC compressor 11 compresses the VOC generated in the second oil storage tank and returns the compressed VOC to the first oil storage tank OT, in loading of the second oil storage tank OT to which the VOC has already been introduced.

That is, the VOC generated in the oil storage tank under loading is transferred to an empty oil storage tank OT. When loading is performed on the oil storage tank OT to which the VOC is transferred, the VOC generated in the loading process may be returned to an oil storage tank OT in which loading is completed to a certain level (50 to 80% as a degree to which the VOC can be sufficiently absorbed in the oil while being returned) and/or another empty oil storage tank.

Unlike in the loading of the first oil storage tank OT, the second oil storage tank OT has already been filled with the VOC, and the VOC is mixed in the oil while the oil is being loaded. Therefore, an amount of VOC generated in the loading of the second oil storage tank OT may be smaller than that of VOC generated in the loading of the first oil storage tank OT.

Therefore, the amount of VOC to be treated by the VOC compressor 11 when oil is loaded in the oil storage tank after the second oil storage tank is changed as compared with when the oil is loaded into the oil storage tank OT for the first time, and hence a load or a number of oil storage tanks to be operated may be reduced.

The VOC generated in the second oil storage tank OT is compressed in the VOC compressor 11, is cooled by using the intercooler 111, the VOC liquefier 14, etc., if necessary, and is returned into the oil in the first oil storage tank OT.

That is, the VOC return line 157 connected from the VOC compressor 11 to the inside of the oil storage tank OT may extend down to an inner lower side of the oil storage tank OT, to enable the returned VOC to be introduced into the oil. Accordingly, the VOC is not again discharged after the VOC is returned.

However, in this embodiment, unlike the drawing, the VOC return line 157 may be extend to only an inner upper side of the oil storage tank OT as described in the above-described example shown in FIG. 21, and a VOC transfer line (not shown) may be provided from the VOC discharge line 13 to the bunkering line BL so as to utilize the bunkering line BL extending down to the inner lower side of the oil storage tank OT.

The VOC compressor 11 may be provided even in the VOC transfer line so as to efficiently regulate pressures, flow rates, etc. in the VOC transfer line, the VOC discharge line 13, and the VOC return line 157. However, data of the VOC compressor 11 in the VOC transfer line may be different from that of the VOC compressor 11 provided in the VOC discharge line 13.

Unlike the above, the VOC transfer line may be provided to branch off from the VOC return line 157 at a downstream of the VOC compressor 11 to which the VOC discharge line 13 is connected, to share the VOC compressor 11. However, the present invention is not limited thereto.

Since a portion of the bunkering line BL is used to return the VOC, an oil storage tank OT in which the VOC is returned into the oil may be limited to that bunkering has been completely performed on the oil storage tank OT.

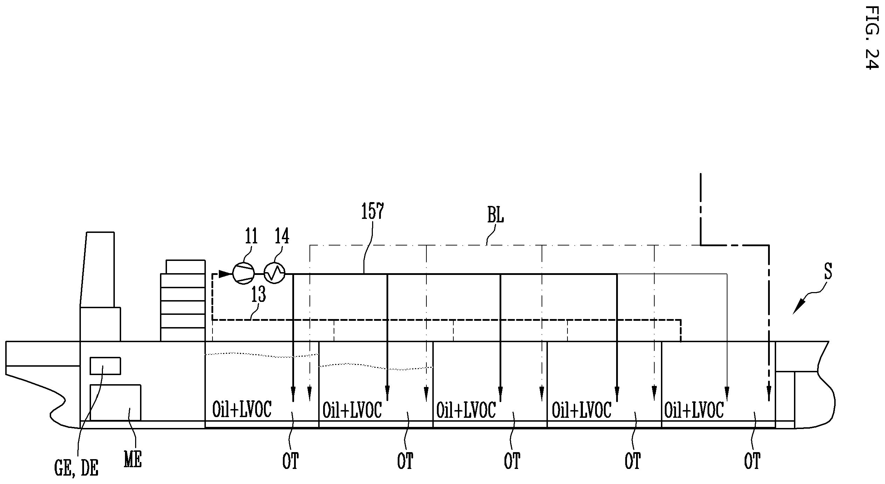

In this embodiment, a VOC generated in an oil storage tank into which the oil is lastly loaded may be divided and returned to at least some oil storage tanks OT among the other oil storage tanks OT as shown in FIG. 24.

A VOC is filled in the last oil storage tank OT and then absorbed by oil while the oil is being loaded. A portion of the VOC is returned/absorbed into the oil loaded into another oil storage tank OT.

When oil is loaded into a new oil storage tank OT (loading of a third oil storage tank OT) in a situation in which a number of oil storage tanks OT in which the oil is filled to a certain level or higher, even if not loading of the last oil storage tank, the VOC may be compressed/cooled and then distributed and returned.

As described above, in this embodiment, any process of discharging the VOC to the outside does not exist even when the load of all the oil storage tanks OT has been finally completed, and oil and LVOC mainly exist in the oil storage tank OT.

In this embodiment, as shown in FIG. 25, a pressure gauge (not indicated by a reference numeral), a flowmeter (not indicated by a reference numeral), a thermometer (not indicated by a reference numeral), and the like may be provided in the VOC discharge line 13 and the VOC return line 157, in which the VOC compressor 11 is provided, and various types of valves (not indicated by reference numerals) may be controlled by the sensors.

That is, in this embodiment, a VOC continuously generated in loading is pressurized by the VOC pump 154 or the VOC compressor, cooled to an appropriate temperature, and then divided and transferred to an empty oil storage tank on which loading has not yet been performed. The transferred VOC is injected at a low portion of an oil storage tank into which an appropriate amount of oil is loaded, to be reabsorbed into the oil.

In this embodiment, the entire VOC generated between loadings when the loading is finally ended can be absorbed into the oil by repeating this process. Hence, the discharge of the VOC is completely blocked. Accordingly, environmental regulation can be handled, and OPEX can be decreased.

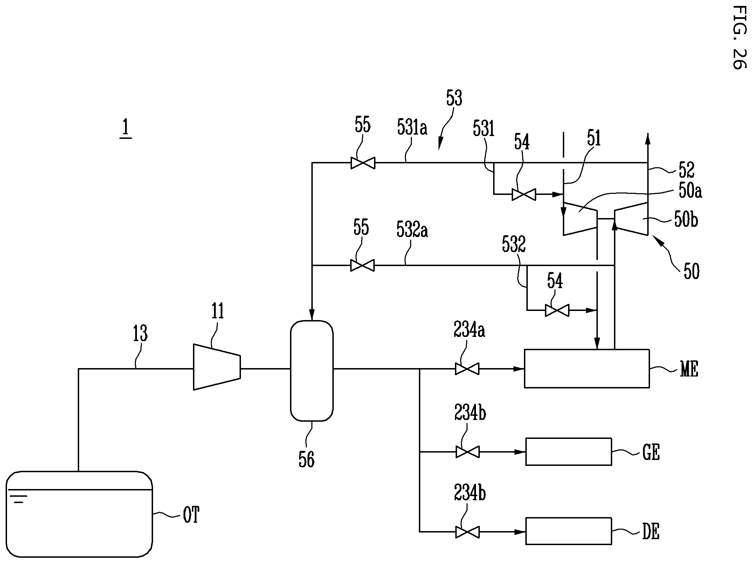

FIG. 26 is a conceptual view of a ship including a VOC treatment system in accordance with a twentieth example.

Referring to FIG. 26, in the VOC treatment system in accordance with the twentieth example, exhaust of an engine ME and GE may be used so as to prepare for a case where the methane number of a VOC does not accord with a required condition of the engine ME and GE, when the VOC is supplied to the engine ME and GE.

In this example, a turbo charger 50 is provided in the engine ME and GE. The turbo charger 50 has a configuration in which a compression unit 50a and a turbine unit 50b are connected through a common shaft, to compress predetermined gas while the compression unit 50a is rotated when the turbine unit 50b is rotated by the exhaust.

A predetermined gas supply line 51 may be connected to an intake manifold of the engine ME and GE via the compression unit 50a. On the contrary, an exhaust discharge line 52 may be provided via the turbine unit 50b at an exhaust manifold of the engine ME and GE.

As for the engine ME and GE in which the turbo charger 50 is provided as described above, an exhaust gas recirculation (EGR) system for recirculating exhaust in a cylinder has recently been used to lower a ratio of nitrogen oxide included in the exhaust due to environmental regulation.

The EGR system has a configuration in which exhaust including inert gas (carbon dioxide) is supplied together with predetermined gas into the cylinder to lower a combustion temperature in the cylinder, thereby suppressing the occurrence of nitrogen oxide.

The EGR system may be applied to this example. In this example, the EGR system may be designated as an exhaust circulation unit 53.

In this example, the exhaust circulation unit 53 may supply exhaust to the front and the rear of the compression unit 50a at the front and the rear of the turbine unit 50b and allow the exhaust to be mixed with the predetermined gas. In an example, high-pressure exhaust circulation (HP EGR) for supplying high-pressure exhaust at an upstream of the turbine unit 50b to an upstream or downstream of the compression unit 50a or low-pressure exhaust circulation (LP EGR) for supplying low-pressure exhaust at a downstream of the turbine unit 50b to the upstream of the compression unit 50a is possible.

To this end, a low-pressure exhaust circulation line 531 may be connected to the upstream or downstream of the compression unit 50a at the downstream of the turbine unit 50b. On the other hand, a high-pressure exhaust circulation line 532 may be connected to the upstream or downstream of the compression unit 50a at the upstream of the turbine unit 50b. A cooler (not shown), a filter (not shown), an exhaust recirculation valve (EGR valve) 54, and the like are provided in each of the exhaust circulation lines 531 and 532.

A portion of the exhaust circulated through the exhaust circulation unit 53 may be joined with a VOC through exhaust transfer lines 531a and 532a. This will be described later.

In this example, a VOC discharge line 13 may be provided from an oil storage tank OT to the engine ME and GE so as to supply the VOC generated in the oil storage tank OT to the engine ME and GE, and a VOC compressor 11, a mixer 56, and the like are provided in the VOC discharge line 13.

Since the VOC generated in the oil storage tank OT has a caloric value, the VOC may be used as fuel of the engine ME and GE. However, a state of the fuel, which the engine ME and GE requires, may be changed according to a kind of the engine ME and GE (e.g., a main engine ME, a generator engine GE, etc.), a load of the engine ME and GE, an operation condition, etc. In particular, when the fuel is gas, a methane number has great influence on an operation of the engine ME and GE.

The methane number is to be secured to a certain degree or more so as to maintain a stable operation while operating the engine ME and GE in a gas mode. When only the VOC is supplied, regulation of the methane number is impossible, and therefore, liquefied gas or the like is mixed in the above-described embodiment.

However, in this example, inert gas (carbon dioxide) may be used to efficiently regulate the methane number, instead of that the liquefied gas is separately mixed or in addition to that the liquefied gas is mixed. In particular, by considering that a large amount of carbon dioxide is contained in the exhaust, the exhaust may be mixed with the VOC, to set the methane number of the VOC supplied to the engine ME and GE.

To this end, the mixer 56 is provided between the oil storage tank OT and the engine ME and GE (e.g., between the VOC compressor 11 and the engine ME and GE), and the exhaust transfer lines 531a and 532a are to the mixer 56 on the exhaust circulation lines 531 and 532. Since an exhaust transfer valve 55 is provided in the exhaust transfer lines 531a and 532a, the mixer 56 may mix at least a portion of the exhaust circulated in the exhaust circulation unit 53 with the VOC to regulate the methane number of the VOC, and supply the mixture to the engine ME and GE.

Specifically, the exhaust transfer lines 531a and 532a may be provided with a low-pressure exhaust transfer line 531a branching off from the low-pressure exhaust circulation line 531 or a high-pressure exhaust transfer line 532 branching off from the high-pressure circulation line 532. The exhaust transfer valve 55 provided in the exhaust transfer lines 531a and 532a may regulate a mixture flow rate of the exhaust according to the state of the engine ME and GE and the methane number of the VOC.

That is, the exhaust transfer valve 55 may regulate a flow rate of the exhaust transferred such that the methane number accords with a required condition of the engine ME and GE as the exhaust containing the carbon dioxide is mixed with the VOC. To this end, a sensor for sensing a temperature or flow rate of the exhaust, a component for receiving information on the methane number of the VOC, the required condition of the engine ME and GE, and the like may be added, if necessary.

As described above, in this example, the VOC is compressed and then supplied to the engine ME and GE, and the methane number is regulated by mixing at least a portion of the exhaust (carbon dioxide) circulated as predetermined gas with the VOC, when a methane number to a certain degree or more is required to operate the engine ME and GE in the gas mode. Thus, the methane number can be regulated even when the liquefied gas is not mixed with the VOC, and accordingly, the system can be simply and efficiently established.

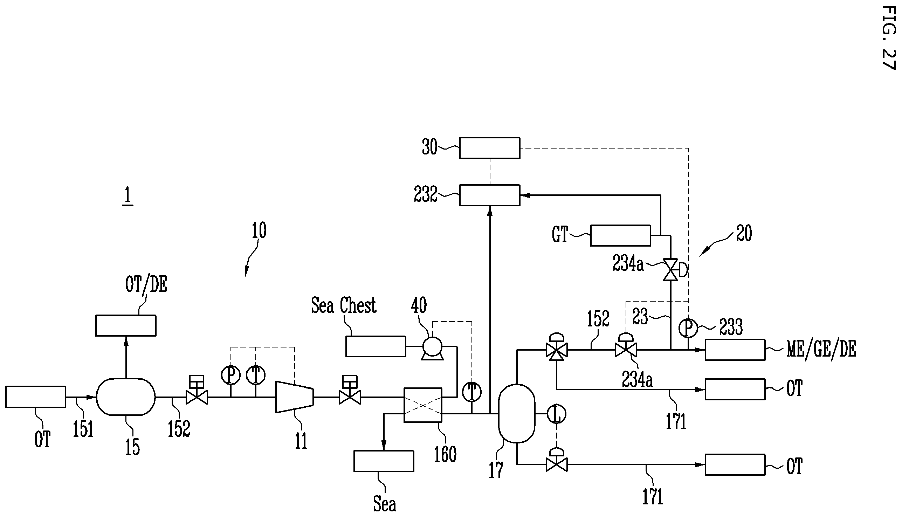

FIG. 27 is a conceptual view of a ship including VOC treatment systems in accordance with twenty-first and twenty-second examples.

Referring to FIG. 27, the VOC treatment system 1 in accordance with the twenty-first example includes a fuel treatment unit 10 and 20 for mixing a VOC and liquefied gas, which are respectively stored in a VOC storage tank 15 and a gas fuel storage tank GT, and supplying the mixture as fuel of an engine ME, GE, and DE, a gas analyzer 232, and a control unit 30. Hereinafter, in this example, portions different from those of the above-described fifth example will be mainly described, and omitted descriptions will be derived from the foregoing example.

The fuel treatment unit 10 and 20 may satisfy a methane number required for each load in the engine ME, GE, and DE by mixing the VOC and the liquefied gas at an appropriate ratio so as to achieve smoothing combustion and to prevent a knocking phenomenon.

To this end, the fuel treatment unit 10 and 20 may include a VOC treatment unit 10 including components used to treat the VOC and a gas fuel treatment unit 20 including components used to treat the gas fuel.

The VOC treatment unit 10 supplies a VOC generated from an oil storage tank OT as fuel of the engine ME, GE, and DE mounted in the ship S. To this end, the VOC treatment unit 10 may include a VOC compressor 11, a third heat exchanger 16c, a gas-liquid separator 17, and the like.

The third heat exchanger 16c may cool the VOC supplied through the VOC supply line 152 at a rear end of the VOC compressor 11 through seawater supplied through a seawater pump 40, and supply the heat-exchanged VOC to the gas-liquid separator 17. The seawater stored may be supplied through a seawater supply line by using the seawater pump 40, and be discharged to sea after the seawater is used. A thermometer for verifying whether the temperature of the heated-exchanged VOC corresponds to a temperature required in the engine ME, GE, and DE may be provided in the VOC supply line 152 at a rear end of the third heat exchanger 16c.

The gas-liquid separator 17 may supply a portion of the VOC liquefied through heat exchange in the third heat exchanger 16c to the oil storage tank OT through a VOC return line 171, and supply the other VOC to the engine ME, GE, and DE through the VOC supply line 152. A filter (not shown) at an upstream of a spot at which the VOC and the liquefied gas are mixed may be disposed at a rear end of the gas-liquid separator 17 connected to the engine ME, GE, and DE, to remove an impurity contained in the VOC. A portion of the VOC may be supplied to the oil storage tank OT through the VOC return line 171 at an upstream of the filter.

The gas fuel treatment unit 20 may mix the liquefied gas of the gas fuel storage tank GT with the VOC supplied to the engine ME, GE, and DE through the VOC supply line 152. A substance obtained by mixing the VOC and the liquefied gas in the gas fuel treatment unit 20 may be designated as fuel in this specification.

A gas fuel supply line 23 may be provided from the gas fuel treatment unit 20 to the engine ME, GE, and DE, and a pressure gauge 233 for verifying whether the pressure of the fuel corresponds to a pressure required in the engine ME, GE, and DE may be provided in the gas fuel supply line 23.

The gas analyzer 232 measures each of a methane number of the VOC supplied to the engine ME, GE, and DE through the VOC treatment unit 10 and a methane number of the VOC before the VOC and the liquefied gas are mixed through the gas fuel treatment unit 20. As described above, in this specification, the methane number may mean a methane number including all data of the fuel, such as a component, calorie, or the like of the fuel, in addition to the methane number.

The control unit 30 controls a flow rate of the VOC and/or the liquefied gas, transferred to the spot at which the VOC and the liquefied gas are mixed according to a methane number measured by the gas analyzer in the gas fuel treatment unit 20. Therefore, a ratio of the VOC and the liquefied gas, which are included in the fuel generated in the gas fuel treatment unit 20, may be controlled by the control unit 30.

The control unit 30 may control a flow rate of the VOC and/or the liquefied gas, transferred to the gas fuel treatment unit 20 in various methods using a pump, a valve, etc. In an example, a transfer valve for regulating the flow rate of the VOC and the liquefied gas may be provided in at least one of the VOC treatment unit 10 and the gas fuel treatment unit 20. The control unit 30 may control a flow rate of the transfer valve. Preferentially, a pressure control valve 234a may be provided on the VOC supply line 152 of the VOC treatment unit 10 and/or the gas fuel supply line 23 of the gas fuel treatment unit 20. The control unit 30 may control a pressure of the pressure control valve 234a.

The control unit 30 may set the methane number of the fuel generated in the gas fuel treatment unit 20 to a level required in the engine ME, GE, and DE by controlling the transfer valve, preferentially, the pressure control valve 234a according to a measurement value of the gas analyzer 232.

A VOC return line (not shown) for returning at least a portion of the VOC to the VOC storage tank 15 may be provided at an upstream of the spot at which the VOC and the liquefied gas are mixed. A VOC return valve (not shown) as a return valve may be provided on the VOC return line (not shown).

Identically/similarly, a gas fuel return line (not shown) for returning at least a portion of the liquefied gas discharged from the gas fuel storage tank GT may be provided at the upstream of the spot at which the VOC and the liquefied gas are mixed in the gas fuel supply line 23, and a gas fuel return valve (not shown) as a return valve may be provided on the gas fuel return line (not shown).

The control unit 30 may allow the flow rate of the VOC transferred to the engine ME, GE, and DE by the VOC return valve (not shown) and/or the flow rate of the liquefied gas transferred to the engine ME, GE, and DE by the gas fuel return valve (not shown) to be regulated by controlling the VOC return valve (not shown) and/or the gas fuel return valve (not shown) according to the measurement value of the gas analyzer 232, so that the methane number of the fuel can be set to that required in the engine ME, GE, and DE.

Therefore, the control unit 30 may actively control a flow rate at which the VOC and the liquefied gas are mixed by measuring methane number of the VOC and the liquefied gas before the VOC and the liquefied gas are mixed.

As described above, in this example, the VOC discharged in the air is used as the fuel of the engine ME, GE, and DE, the liquefied gas and the VOC are mixed and then supplied to the engine ME, GE, and DE so as to satisfy data (a methane number, a calorie, a component, etc.) of the fuel, required in the engine ME, GE, and DE. Thus, the VOC can be recycled, and the operation efficiency of the engine ME, GE, and DE can be ensured.

Referring to FIG. 27, the VOC treatment system 1 in accordance with the twenty-second example and a VOC treatment method using the same provide a detailed structure for measuring methane numbers of the VOC and the liquefied gas and a control method of the control unit 30, using the structure, in the VOC treatment system 1 in accordance with the above-described twenty-first example. Hereinafter, in this example, portions different from those of the above-described twenty-first example will be mainly described, and omitted descriptions will be derived from the foregoing example.

The control unit 30 controls a flow rate of the VOC and/or the liquefied gas, transferred to the spot at which the VOC and the liquefied gas are mixed according to a methane number measured by the gas analyzer 232 in the gas fuel treatment unit 20. That is, the control unit 30 controls a mixture ratio of the VOC and the liquefied gas.

The gas analyzer 232 may measure each of methane numbers of the VOC and the liquefied gas by using gas chromatography, but a measurement time is required. Therefore, when an environmental change of the system such as a rapid change in load of the engine ME, GE, and DE is accompanied, a delay may occur when the mixture ratio of the VOC and the liquefied gas is controlled through methane number measurement. Accordingly, a method for reducing or preventing the delay is required.

In this example, the methane number of each of the VOC and the liquefied gas before the VOC and the liquefied gas are mixed is stored and used as a reference value, so that a delay which may occur when the mixture ratio of the VOC and the liquefied gas is controlled can be reduced or prevented.

A reference value is set by measuring a methane number of each of the VOC and the liquefied gas before the VOC and the liquefied gas are mixed. When a methane number of each of the VOC and the liquefied gas is measured, the methane number of the VOC is measured at a downstream of the gas-liquid separator 17 as an upstream of the spot at which the VOC and the liquefied gas are mixed, and the methane number of the liquefied gas is measured at the upstream of the spot at which the VOC and the liquefied gas are mixed.

The methane number of each of the VOC and the liquefied gas is measured periodically, preferentially, at an interval of a few minutes to a few hours, and is stored in the control unit 30 as a reference value of each of the VOC and the liquefied gas.

The control unit 30 calculates a mixture ratio of the VOC and the liquefied gas, which is used to satisfy data of the fuel, required in the engine ME, GE, and DE, by calculating a change in methane number of each of the VOC and the liquefied gas according to an environmental change of the system, based on the stored reference value. Accordingly, the control unit 30 controls the flow rate of the VOC and/or the liquefied gas, transferred to the spot at which the VOC and the liquefied gas are mixed.

As described above, in this example, a methane number of the VOC is measured at a downstream of the gas-liquid separator 17 as an upstream of the spot at which the VOC and the liquefied gas are mixed, and a methane number of the liquefied gas is measured at the upstream of the spot at which the VOC and the liquefied gas are mixed. Then, the methane number of each of the VOC and the liquefied gas is stored as a reference value. A mixture ratio of the VOC and the liquefied gas, which is used to satisfy data of the fuel, required in the engine ME, GE, and DE, is calculated by comparing variations of the methane numbers of the VOC and the liquefied gas. Thus, the mixture ratio can be rapidly calculated. Accordingly, a delay which may occur when the mixture ratio of the VOC and the liquefied gas is controlled can be reduced or prevented.

The present invention is not limited to the embodiments described above, and it will be apparent that a combination of the embodiments or a combination of at least one of the embodiments and prior art may be included as still another embodiment.

As described above, the present invention has been described based on the embodiments, which are merely exemplary and are not intended to limit the present invention, and those skilled in the art to which the present invention pertains do not depart from the essential technical details of the present embodiment. It will be appreciated that various combinations or modifications and applications not illustrated in the embodiments are possible.

Simple modifications and changes of the present invention belong to the scope of the present invention, and the specific scope of the present invention will be clearly defined by the appended claims.

**[Reference numerals]**

| | | | |
|---|---|---|---|
| S: | ship | OT: | oil storage tank |
| GT: | gas fuel tank | ME: | main engine |
| GE: | generator engine, DFDE | DE: | demand |
| 1: | VOC treatment system | 10: | VOC treatment unit |
| 11: | VOC compressor | 11a: | first VOC compressor |
| 11b: | second VOC compressor | 111 | : intercooler |
| 12: | reformer | 13: | VOC discharge line |
| 13a: | first VOC discharge line | | |
| 13b: | second VOC discharge line | | |
| 13c: | third VOC discharge line | 131: | flowmeter |
| 132: | pressure gauge | 133: | CO2 adsorber |
| 14: | VOC liquefier | 15: | VOC storage tank |
| 151: | VOC storage line | 152: | VOC supply line |
| 153: | pressure gauge | 154: | VOC pump |
| 155: | auxiliary tank | 156: | flowmeter |
| 157: | VOC return line | 1571: | VOC return valve |
| 1572: | VOC injector | 158: | VOC high-pressure pump |
| 159: | VOC evaporator | 16: | heat exchanger |
| 16a: | first heat exchanger | 16b: | second heat exchanger |
| 16c | third heat exchanger | 17: | gas-liquid separator |
| 17a: | first gas-liquid separator | | |
| 17b: | second gas-liquid separator | | |
| 171: | VOC return line | 20: | gas fuel treatment unit |
| 21: | gas fuel pump | 22: | gas fuel evaporator |
| 221: | heat medium supply unit | 23: | gas fuel supply line |
| 231: | flowmeter | 232: | gas analyzer |
| 233: | pressure gauge | | |
| 234a, 234b: | pressure regulating valve | | |
| 235: | gas fuel return line | 236: | gas fuel return valve |
| 24: | gas fuel high-pressure pump | 25: | gas fuel branch-off line |
| 251: | gas fuel heater | | |
| 252: | pressure regulating valve | | |
| 26: | evaporation gas supply line | 27: | mixer |
| 28: | gas fuel liquefier | 30: | control unit |
| 40: | seawater pump | 50: | turbo charger |
| 50a: | compression unit | 50b: | turbine unit |
| 51: | gas supply line | 52: | exhaust discharge line |
| 53: | exhaust circulation unit | | |
| 531: | low-pressure exhaust circulation line | | |
| 531a: | low-pressure exhaust transfer line | | |
| 532: | high-pressure exhaust circulation line | | |
| 532a: | high-pressure exhaust transfer line | | |
| 54: | exhaust recirculation valve | | |
| 55: | exhaust transfer valve | | |
| 56: | mixer | | |

## Claims

1. A Volatile Organic Compounds, VOC, treatment system (1) comprising:
a plurality of crude oil storage tanks, OT, configured to have crude oil loaded thereinto; and
a VOC compressor (11), configured to pressurize a VOC generated when crude oil is loaded into the crude oil storage tanks, OT,
wherein the VOC compressor (11) is configured to compress a VOC generated in a first crude oil storage tank, OT, during loading and to transfer the compressed VOC to a second crude oil storage tank, OT, before loading of said second crude oil storage tank, OT,
wherein the VOC compressor (11) is further configured to compress a VOC generated in the second crude oil storage tank, OT, during loading of the second crude oil storage tank, OT, and to return the compressed VOC to the first crude oil storage tank, OT.

2. The VOC treatment system (1) of claim 1, wherein the VOC compressor (11) is configured to compress a VOC and to return the compressed VOC to the inside of crude oil loaded into the first crude oil storage tank, OT.

3. The VOC treatment system (1) of claim 1, comprising:
a VOC discharge line (13) configured to be connected from the crude oil storage tank, OT, to the VOC compressor (11); and
a VOC return line (157) configured to be connected from the VOC compressor (11) to the inside of the crude oil storage tank, OT.

4. The VOC treatment system (1) of claim 3, wherein the VOC return line (157) is configured to extend down to an inner lower side of the crude oil storage tank, OT.

5. The VOC treatment system (1) of claim 1, wherein the VOC compressor (11) is configured to compress a VOC generated in the crude oil storage tank, OT, into which the crude oil is lastly loaded, and to divide and return the compressed VOC to the other crude oil storage tanks, OT.

6. A ship having the VOC treatment system (1) of any one of claims 1 to 5.

## Patentansprüche

1. System (1) zur Behandlung flüchtiger organischer Verbindungen (volatile organic compounds, VOC), das Folgendes umfasst:
eine Vielzahl von Rohöl-Lagertanks (OT), die so konfiguriert sind, dass sie mit Rohöl beladen werden können; und
einen VOC-Kompressor (11), der so konfiguriert ist, dass er eine VOC unter Druck setzt, die erzeugt wird, wenn Rohöl in die Rohöl-Lagertanks OT geladen wird,
wobei der VOC-Kompressor (11) so konfiguriert ist, dass er eine in einem ersten Rohöl-Lagertank OT erzeugte VOC während des Beladens komprimiert und die komprimierte VOC vor dem Beladen des zweiten Rohöl-Lagertanks OT in einen zweiten Rohöl-Lagertank OT überführt,
wobei der VOC-Kompressor (11) ferner so konfiguriert ist, dass er eine in dem zweiten Rohöl-Lagertank OT erzeugte VOC während des Beladens des zweiten Rohöl-Lagertanks OT komprimiert und die komprimierte VOC zu dem ersten Rohöl-Lagertank OT zurückführt.

2. VOC-Behandlungssystem (1) nach Anspruch 1, wobei der VOC-Kompressor (11) so konfiguriert ist, dass er eine VOC komprimiert und die komprimierte VOC in das Innere des in den ersten Rohöl-Lagertank OT geladenen Rohöls zurückführt.

3. Das VOC-Behandlungssystem (1) nach Anspruch 1, umfassend:
eine VOC-Ablassleitung (13), die so konfiguriert ist, dass sie vom Rohöl-Lagertank OT mit dem VOC-Kompressor (11) verbunden wird; und
eine VOC-Rücklaufleitung (157), die so konfiguriert ist, dass sie vom VOC-Kompressor (11) an das Innere des Rohöllagertanks OT angeschlossen werden kann.

4. VOC-Behandlungssystem (1) nach Anspruch 3, wobei die VOC-Rücklaufleitung (157) so konfiguriert ist, dass sie sich bis zu einer inneren Unterseite des Rohöllagertanks OT erstreckt.

5. VOC-Behandlungssystem (1) nach Anspruch 1, wobei der VOC-Kompressor (11) so konfiguriert ist, dass er ein VOC komprimiert, die in dem Rohöl-Lagertank OT erzeugt wird, in den das Rohöl zuletzt geladen wird, und dass er die komprimierte VOC abscheidet und zu den anderen Rohöl-Lagertanks OT zurückführt.

6. Schiff mit dem VOC-Behandlungssystem (1) nach einem der Ansprüche 1 bis 5.

## Revendications

1. Un système (1) de traitement des composés organiques volatils (COV) comprenant :
une pluralité de réservoirs (OT) de stockage de pétrole brut conçu pour recevoir du pétrole brut ; et
un compresseur de COV (11), conçu pour pressuriser les COV générés lorsque le pétrole brut est chargé dans les réservoirs (OT) de stockage de pétrole brut,
le compresseur de COV (11) étant conçu pour comprimer les COV générés dans un premier réservoir (OT) de stockage de pétrole brut pendant le chargement et pour transférer les COV comprimés vers un deuxième réservoir (OT) de stockage de pétrole brut, avant le chargement dudit deuxième réservoir (OT) de stockage de pétrole brut,
le compresseur de COV (11) étant en outre conçu pour comprimer un COV généré dans le deuxième réservoir (OT) de stockage de pétrole brut pendant le chargement du deuxième réservoir (OT) de stockage de pétrole brut et pour renvoyer le COV comprimé vers le premier réservoir (OT) de stockage de pétrole brut.

2. Le système (1) de traitement de COV selon la revendication 1, dans lequel le compresseur de COV (11) est conçu pour comprimer un COV et pour renvoyer le COV comprimé à l'intérieur du pétrole brut chargé dans le premier réservoir (OT) de stockage de pétrole brut.

3. Le système (1) de traitement de COV selon la revendication 1, comprenant :
une conduite (13) d'évacuation des COV, conçue pour être reliée de façon à aller du réservoir (OT) de stockage de pétrole brut au compresseur de COV (11) ; et
une conduite (157) de retour des COV, conçue pour être reliée de façon à aller du compresseur de COV (11) jusqu'à l'intérieur du réservoir (OT) de stockage de pétrole brut.

4. Le système (1) de traitement de COV selon la revendication 3, dans lequel la conduite (157) de retour des COV est conçue de façon à s'étendre vers le bas jusqu'à une partie interne inférieure du réservoir (OT) de stockage de pétrole brut.

5. Le système (1) de traitement de COV selon la revendication 1, dans lequel le compresseur de COV (11) est conçu pour comprimer les COV générés dans le réservoir (OT) de stockage de pétrole brut dans lequel le pétrole brut est chargé en dernier, et pour diviser et renvoyer les COV comprimés vers les autres réservoirs (OT) de stockage de pétrole brut.

6. Un navire équipé du système (1) de traitement de COV selon l'une quelconque des revendications 1 à 5.
